(19) Europäisches Patentamt
European Patent Office
Office européen des brevets

(11) **EP 3 129 651 B1**

(12) **EUROPÄISCHE PATENTSCHRIFT**

(45) Veröffentlichungstag und Bekanntmachung des Hinweises auf die Patenterteilung:
**18.12.2019  Patentblatt 2019/51**

(21) Anmeldenummer: **15718156.1**

(22) Anmeldetag: **02.04.2015**

(51) Int Cl.:
**F03D 13/00** (2016.01)

(86) Internationale Anmeldenummer:
**PCT/EP2015/057377**

(87) Internationale Veröffentlichungsnummer:
**WO 2015/155131 (15.10.2015 Gazette 2015/41)**

(54) **GONDEL EINER WINDENERGIEANLAGE**

NACELLE OF A WIND TURBINE

NACELLE POUR ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2014  DE 102014206703**
**09.04.2014  DE 102014206880**

(43) Veröffentlichungstag der Anmeldung:
**15.02.2017  Patentblatt 2017/07**

(73) Patentinhaber: **Wobben Properties GmbH**
**26607 Aurich (DE)**

(72) Erfinder:
• **GUDEWER, Wilko**
**26506 Norden (DE)**

• **COORDES, Ihno**
**26632 Ihlow (DE)**
• **KNOOP, Frank**
**26607 Aurich (DE)**
• **GEIKEN, Peter**
**26721 Emden (DE)**
• **FLESSNER, Thorsten**
**26607 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A1- 1 748 216          EP-A2- 1 065 374**
**WO-A1-2008/006377     DE-A1-102010 043 435**
**US-A1- 2013 195 653**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 129 651 B1

**Beschreibung**

Die vorliegende Erfindung betrifft eine Gondel eine Windenergieanlage sowie ein Verfahren zum Herstellen einer Gondel einer Windenergieanlage. Außerdem betrifft die vorliegende Erfindung eine Windenergieanlage.

Windenergieanlagen sind bekannt und die wohl üblichste Art ist eine sog. Horizontalachsenwindenergieanlage, bei der ein aerodynamischer Rotor von dem Wind angetrieben wird und um eine im Wesentliche horizontale Achse dreht. Der Rotor treibt einen Generator an und die vorliegende Erfindung betrifft insbesondere eine getriebelose Windenergieanlage, bei der der aerodynamische Rotor unmittelbar mit dem Generator, nämlich seinem elektrodynamischen Rotor bzw. Läufer gekoppelt ist.

Der Generator und damit im Ergebnis auch der aerodynamische Rotor werden von einem Maschinenträger auf einem Turm getragen. Zudem kann üblicherweise über ein Azimutlager zwischen Maschinenträger und Turm eine Azimutverstellung, nämlich Ausrichtung des Rotors zum Wind, erreicht werden. Zumindest der Generator, der Maschinenträger und weitere zum Steuern der Windenergieanlage notwendigen Elemente sind in einer Gondel untergebracht, die diese Elemente durch eine Gondelverkleidung oder Gondelaußenhaut oder dergleichen vor Witterungseinflüssen schützt, insbesondere vor Niederschlägen und Wind.

Solche Gondeln sind grundsätzlich bekannt, können aber einige Probleme aufweisen. Dazu gehört, dass besonders in drehenden Teilen, wie dem Generator, Geräusche erzeugt werden, die die Gondel als hörbaren Schall nach außen abstrahlt. Außerdem ist es recht aufwendig, solche Gondeln vor Ort zum Errichten einer Windenergieanlage bereitzustellen, weil solche Gondeln bei modernen Windenergieanlagen, insbesondere getriebelosen Windenergieanlagen, Größen aufweisen, die auf der Straße kaum mehr transportiert werden können und ein Zerlegen zum Transport erforderlich machen, oder eine andere Art und Weise der Herstellung am Errichtungsort benötigen. Entsprechend muss hierbei auch die Problematik der Schallabstrahlung und natürlich auch die Notwendigkeit des Schutzes vor Witterungseinflüssen berücksichtigt werden.

Es ist bereits bekannt, eine solche Gondel in Einzelteilen vorzubereiten und dann diese Einzelteile zum Errichtungsort zu transportieren und dort zusammenzusetzen, was aber selbst noch einigen Transportaufwand hervorruft. Der Transport von Elementen, insbesondere genau gefertigte Elemente, die später abdichtend zusammengesetzt werden sollen, birgt zudem die Gefahr, dass Beschädigungen beim Transport die Funktionsfähigkeit einschränkt.

Dies macht nicht nur eine Reparatur oder andere Maßnahme am Aufstellungsort erforderlich, sondern kann ggf. auch Auswirkungen auf die vorgesehene Berechnung wie Belastungsberechnungen haben und ggf. sogar vorhandene Zertifizierungen für bestimmte Eigenschaften nicht mehr anwendbar machen.

Aus US 2013/195653 A1 ist das Dämpfen von an einer Windenergieanlage entstehenden Vibrationen bekannt. Die Windenergieanlage weist eine Gondel mit einem Rahmen auf, der auf dem oberen Ende eines Turmes angeordnet ist. An dem Rahmen ist über Linearführungen und elastische Elemente die Gondelverkleidung montiert. Die Gondelverkleidung bildet dabei eine schwingungsfähige Masse aus, welche als eine Art Gegengewicht die beispielsweise durch den Generator der Windenergieanlage erzeugten Schwingungen ausgleichen soll.

Die deutsche Offenlegungsschrift DE 10 2010 043 435 A1 zeigt einen Modulträger zum Aufnehmen von Elektromodulen für Pitchantriebe, wobei der Modulträger an der Rotornabe befestigt ist. Zudem wird über elastische Verbindungsmittel eine als Spinnerkappe ausgebildete Statorkappe mit dem Modulträger befestigt.

Das Deutsche Patent- und Markenamt hat in der Prioritätsanmeldung zu vorliegender Anmeldung folgenden Stand der Technik recherchiert: US 2007/0090269 A1 und DE 10 2010 043 435 A1.

Der vorliegenden Erfindung liegt somit die Aufgabe zugrunde, zumindest eins der o.g. Probleme zu adressieren. Insbesondere soll eine Lösung vorgeschlagen werden, die eine Schallemission der Gondeln reduziert und/oder das Errichten einer Windenergieanlage, insbesondere im Hinblick auf das Herstellen und/oder Bereitstellen der Gondel vereinfachen, möglichst kostengünstiger gestalten. Zumindest soll gegenüber bisher bekannten Lösungen eine alternative Lösung vorgeschlagen werden.

Erfindungsgemäß wird eine Gondel gemäß Anspruch 1 vorgeschlagen. Diese Gondel weist einen Maschinenträger, ein Tragmodul und eine Gondelverkleidung auf. Das Tragmodul nimmt elektrische Steuereinrichtung auf und kann auch als E-Modul bezeichnet werden. Die Gondelverkleidung ist zum Schützen zumindest des Tragmoduls einschließlich der damit aufgenommenen elektrischen Steuereinrichtungen und des Maschinenträgers vor Witterungseinflüssen vorgesehen. Die Gondelverkleidung bietet also im Wesentlichen eine geschlossene Hülle. Die geschlossene Hülle kann zwar Öffnungen wie Lüftungsöffnungen oder Ein- oder Ausstiegsluken aufweisen, die aber so gestaltet sind, dass im normalen Betrieb, also insbesondere bei geschlossenen Luken, der Schutz vor Witterungseinflüssen, insbesondere vor Niederschlägen und Wind, gewährleistet ist. Für die geschlossene Hülle insgesamt wird unterschieden zwischen der Gondelverkleidung im Bereich des Tragmoduls, der Generatorverkleidung im Bereich des Generators und der Spinnerverkleidung, die alle Teile umschließt, die sich gemeinsam mit der Rotornabe drehen.

Es wird nun vorgeschlagen, dass das Tragmodul und außerdem oder alternativ die Gondelverkleidung über Entkopplungsmittel mit dem Maschinenträger verbunden sind, so dass darüber eine elastisch bedämpfte Verbindung mit dem Maschinenträger besteht. Dies wird insbesondere für das Tragmodul vorgeschlagen, das somit über diese Entkopplungsmittel mit dem Maschinenträger verbunden ist. Insbesondere wird es über diese Entkopplungsmittel von dem Maschinenträger getragen und vorzugsweise besteht ausschließlich über diese Entkopplungsmittel eine tragende Verbindung zum Maschinenträger. Natürlich können andere Verbindungen, wie bspw. elektrische Leitungen oder schützende Abdeckungen, die einen Trennspalt zwischen Maschinenträger und Tragmodul abdecken, beide Elemente, also Maschinenträger und Tragmodul berühren, was im Übrigen auch im Hinblick auf die Gondelverkleidung gelten kann, aber die Tragfunktion wird hier nur über diese Entkopplungsmittel vorgenommen. Das Entkopplungsmittel führt somit dazu, dass das Tragmodul von dem Maschinenträger getragen wird, ansonsten aber von dem Maschinenträger entkoppelt ist. Insbesondere wird das Übertragen von Körperschall von dem Maschinenträger zum Tragmodul verhindert. Eine vollständige Verhinderung der Übertragung von Körperschall kann möglicherweise nicht erreicht werden, die Übertragung wird aber zumindest signifikant verhindert bzw. gedämpft.

Es wurde nämlich erkannt, dass wesentlicher Schall, der auch letztlich als Schallemission von der Gondel abgestrahlt wird und von der Umwelt als Schall wahrgenommen wird, von dem Generator erzeugt wird und von diesem erst in die Gondel und dann letztlich in die Gondelverkleidung übergeleitet wird, die diesen Schall dann als Resonanzkörper erst abgibt, mitunter sogar verstärkt bzw. von Körperschall in den abgestrahlten Schall umwandelt. Statt die Gondel so umzugestalten, dass sie den Schall nicht oder weniger abstrahlt, wird hier als Lösung vorgeschlagen, das Übertragen des Körperschalls vom Maschinenträger zur Gondelaußenhülle besonders über das Tragmodul zur Gondelverkleidung signifikant zu unterbinden.

Im Ergebnis wird hierbei also das gesamte Tragmodul und gemäß einer Ausführungsform einschließlich der gesamten Gondelverkleidung über diese Entkopplungsmittel auf dem Maschinenträger getragen. Es können bspw. vier Tragpunkte und damit vier Entkopplungsmittel vorgesehen sein, die möglichst gleichmäßig verteilt sind, um das Gewicht des Tragmoduls möglichst gleichmäßig aufzunehmen.

Solche Entkopplungsmittel können bspw. Gummiringe o.ä. aufweisen, in die das Tragmodul mit entsprechenden Aufnahmestiften oder dergleichen eingesetzt wird. Außerdem oder alternativ kommen andere Entkopplungsmittel in Betracht, die bspw. auch aktive Dämpfungselemente, wie Dämpfungszylinder aufweisen können.

Vorzugsweise wird vorgeschlagen, dass die Gondelverkleidung über Entkopplungsmittel an dem Tragmodul befestigt ist, eine Spinnerverkleidung über Entkopplungsmittel an einem Rotor des Generators bzw. einem Läufer des Generators befestigt ist und/oder eine Generatorverkleidung über Entkopplungsmittel an einem Stator des Generators befestigt ist. Dadurch wird an diesen Übergängen zu der jeweiligen Verkleidung bzw. dem jeweiligen Verkleidungsabschnitt eine entkoppelnde, insbesondere nämlich Schall entkoppelnde Verbindung geschaffen, die für die entsprechenden Verkleidungselemente bzw. Verkleidungsabschnitte das Zuführen von Körperschall verhindern, und dadurch das Abstrahlen von Schall verhindern. Die Entkopplungsmittel sind an die jeweilige Aufgabe angepasst, nämlich besonders an die Lasten, die sie jeweils tragen müssen und an die Kraftrichtung, die sich besonders für den Fall der sich drehenden Spinnerverkleidung im Betrieb ständig ändern kann. Ansonsten sind sie sich aber ähnlich, so dass vereinfachend derselbe Begriff, nämlich Entkopplungsmittel, für die unterschiedlichen Verbindungen verwendet wird.

Vorzugsweise sind die Entkopplungsmittel so ausgelegt, dass sie das Übertragen von Körperschall verhindern. Vorzugsweise können solche Entkopplungsmittel einstellbar sein, insbesondere online einstellbar sein, um sich an veränderliche Schallemission anzupassen. Bspw. kann die Frequenz des Körperschalls, dessen Übertragung verhindert werden soll, von der Drehzahl des Generators abhängen. Das könnte durch eine Einstellbarkeit berücksichtigt werden. Ggf. können auch Umweltbedingungen, wie die Temperaturfrequenz und/oder Amplitude des Körperschalls im Maschinenträger, beeinflussen.

Es kommt auch eine einmalige Einstellbarkeit in Betracht, die bei oder kurz vor dem Errichten einer konkreten Windenergieanlage vorgenommen werden kann. Dadurch ist eine Individualisierung auf die konkrete Anlage und/oder den konkreten Standort erzielbar. Hierbei kann auch die Umgebung eine Rolle spielen, nämlich welchen Schall die Umgebung überträgt oder absorbiert oder verstärkt oder aufgrund vorhandener Schallquellen übertönt.

Vorzugsweise ist das Tragmodul dazu ausgebildet, dass es in einen mit den Steuereinrichtungen bestückten Zustand auf dem Maschinenträger aufgesetzt wird bzw. in dafür vorgesehene Aufnahmen der Entkopplungsmittel eingesetzt wird. Das bedeutet somit zum Einen, dass das Tragmodul eine entsprechende Eigenstabilität aufweist, in diesem bestückten Zustand angehoben zu werden. Vorzugsweise sind dafür entsprechende Hebeabschnitte an dem Tragmodul vorgesehen. Das bedeutet aber auch, dass das Tragmodul insgesamt so ausgebildet ist, dass es den Maschinenträger entsprechend umgreifen kann. Insoweit ist also das Tragmodul auf den Maschinenträger abgestimmt. Außerdem oder alternativ kann dies auch dadurch erreicht werden, dass der Maschinenträger entsprechend auf das Tragmittel abgestimmt ist. Die Konstruktion des Maschinenträgers wird aber zu einem wesentlichen Teil von seiner Aufgabe bestimmt, den Generator und den aerodynamischen Rotor zu tragen. Insbesondere bei einer getriebelosen Windenergieanlage sind hier enorme Kräfte aufzunehmen, die der Maschinenträger zum Turmkopf, insbesondere zum Azimutlager hin übertragen muss. Entsprechend ist der Maschinenträger ausgebildet und daran ist das Tragmodul angepasst.

Vorzugsweise werden hierbei auch bereits die Verschaltungen der elektrischen Einrichtungen untereinander vorgenommen, soweit dies Elemente betrifft, die auf dem Tragmodul angeordnet sind, wie bspw. der Generator sowie Anschlussleitung, die den Turm hinunter zum Turmfuß reichen. Ein Großteil der Verbindungen kann jedoch bereits vorgenommen werden. Dies kann zumindest am Aufstellungsort in einem Zelt, einer provisorischen Fertigungshalle oder dergleichen wetterunabhängig vorgenommen werden, oder bereits in der Werkshalle, wobei das Tragmodul baulich so ausgebildet ist, dass es im bestückten Zustand in einen Container passt. Dies bezieht sich auf einen Standard-SeeContainer, der als 20-Fuß oder 40-Fuß Container üblich und bekannt ist. Wichtig ist hierbei Höhe und Breite des Containers, die bei den beiden genannten Containern gleich sind. Die Länge (20 oder 40 Fuß) ist hier nicht die begrenzende Größe.

Beim Aufstellen der Windenergieanlage ist dann das Tragmodul mit seinen Einrichtungen im Wesentlichen vorbereitet und kann vergleichsweise einfach und schnell installiert werden, insbesondere auf den Maschinenträger aufgesetzt werden, der bereits vor Ort ist, insbesondere bereits auf dem Turmkopf bzw. Azimutlager montiert ist.

Die Entkopplungsmittel zum Tragen des Tragmoduls auf dem Maschinenträger sind vorzugsweise in einem peripheren Fuß-Abschnitt oder Fuß-Bereich des Maschinenträgers angeordnet. Dieser Fuß-Abschnitt ist in einem unteren Bereich des Maschinenträgers, nämlich bestimmungsgemäß oberhalb und in der Nähe eines Azimutlagers angeordnet. Insbesondere sind diese Entkopplungsmittel in einem randähnlichen oder kranzähnlichen Abschnitt des Maschinenträgers angeordnet, in dem auch Azimutantriebe zum Bewirken einer Azimutverstellung vorgesehen sind, nämlich an einem Azimutmotoraufnahmeabschnitt. Hierbei sind diese Entkopplungsmittel und somit die Aufnahmestellen in einem sehr tiefen Bereich des Maschinenträgers angeordnet, so dass auch die korrespondierenden Befestigungsmittel, wie bspw. Befestigungsstifte des Tragmoduls, unten an dem Tragmodul angeordnet sein können. Hierdurch kann das Tragmodul in einer stabilen Art und Weise angeordnet werden und reichlich Platz für die elektrischen Einrichtungen bereitstellen.

Gemäß einer Ausgestaltung wird vorgeschlagen, dass die Gondelverkleidung (1270), die Spinnerverkleidung und/oder die Generatorverkleidung jeweils ein Traggerüst (1974) und darin aufgenommene Schalensegmente (308) aufweisen und insbesondere die Schalensegmente generalisiert sind, so dass jeweils mehrere gleiche Schalensegmente vorgesehen sind, und die Schalensegmente dabei so dimensioniert sind, dass sie für einen Transport in 20-Fuß und/oder 40-Fuß-Containern untergebracht werden können. Durch die Generalisierung kann eine Vereinfachung des Aufbaus der Gondel erreicht werden, weil weniger unterschiedliche Teile benötigt werden und gleichzeitig das Transportieren in einem standardisierten Container erfolgen kann. Dadurch können die Elemente beim Transport geschützt werden und es werden Spezial-Transporte vermieden, wodurch Kosten gespart werden können. Das ist möglich geworden, durch die vorgeschlagene Aufteilung der Verkleidung in einzelne Abschnitte, die entsprechend mit Hilfe der generalisierten Verkleidungs-Elemente, besonders Schalensegmente, gebildet werden können.

Vorzugsweise wird vorgeschlagen, dass die Gondel eine Längsachse aufweist, die eine Längsrichtung definiert und insbesondere einer Drehachse des Generators entspricht, und einige oder alle der Schalensegmente in Längsrichtung ausgerichtet sind mit zwei seitlichen, gleich großen Längsrändern, einem kürzeren und einem längeren Querrand, oder zwei gleichen Querrändern, wobei die Querränder jeweils einem Kreisabschnitt des Gondelumfangs der Gondel in der betreffenden Position entsprechen, und wobei die Querränder jeweils eine Sehne aufweisen, nämlich der Abstand zwischen den beiden Längsrändern dort, wobei die Gondel in Längsrichtung in Abschnitte unterteilt ist, und abschnittweise die Anzahl der Schalensegmente so ausgewählt wird und/oder die Schalensegmente so dimensioniert werden, dass die Sehne des längeren Querrandes, und/oder bei gleichem Querrand die Länge des einen Querrandes oder des Längsrandes der innen verfügbaren Breite eines Standardseecontainers (20-Fuß oder 40-Fuß-Container) entspricht, so dass jedes dieser Segmente in den Container gelegt werden kann.

Der Durchmesser der Gondel ändert sich in Längsrichtung und damit existiert für jede Position in Längsrichtung ein spezifischer Umfang oder eine Umfangsgröße. Jeder Querrand eines Segmentes ist an seiner Position mit dem entsprechenden Umfang der Gondel dort identisch, schließlich bilden die Segmente zusammen die Gondelaußenhaut. Für diesen identischen Abschnitt des Gondelumfangs und des Querrandes existiert eine Sehne, die nämlich bei dem Querrand die beiden Längsränder als Gerade verbindet. Diese Sehne wird auf das Innenmaß des Seecontainers angepasst. Weil gleiche Segmente dimensioniert werden sollen, stehen nur diskrete Werte zur Verfügung und es wird entsprechend das größte Maß ausgewählt, das noch kleiner als die Innenbreite des Seecontainers ist. Wenn sich also bspw. bei der Auswahl von 6 gleichen Segmente ein Sehnenmaß ergibt, das größer als die Innenbreite des Container ist, müssen entsprechend mehr als 6 gleiche Segmente gewählt werden. Das kann basierend auf diesem Sehnenmaß ausgerechnet werden.

Eine Ausführungsform schlägt vor, dass die Gondelverkleidung ein Traggerüst oder Tragskelet und darin aufgenommene Schalensegmente aufweist und außerdem oder alternativ an dem Tragmodul befestigt ist und davon getragen wird. Die Gondelverkleidung kann durch das Vorsehen eines solchen Traggerüsts modular ausgebildet sein. Das Traggerüst kann insbesondere auf einfache Art und Weise aus einigen Längs- und Querrippen aufgebaut sein, wobei Querrippen insbesondere um die Gondel um eine waagerechte Achse umlaufende Querrippen sein können. Ein solches Traggerüst oder Rippenkonstruktion bildet dann Aufnahmemöglichkeiten für entsprechende Schalensegmente. Solche Schalensegmente sind vorgefertigte Segmente, bspw. aus Aluminium, und sind an das Traggerüst oder die Traggerippen angepasst und auch in ihrer Wölbung so angepasst, dass sie zusammen eine im Wesentlichen kontinuierliche Gondeloberfläche bilden können.

Vorzugsweise ist die Gondel so konstruiert, dass ein solches Traggerüst an dem Tragmodul befestigt wird und dann dieses Traggerüst die Schalenelemente aufnimmt. Dadurch wird die Gondelverkleidung insgesamt von dem Tragmodul getragen und über die Entkopplungsmittel, über die das Tragmodul entkoppelt ist, dadurch ebenfalls von dem Maschinenträger entkoppelt getragen. Körperschall in dem Maschinenträger, der insbesondere seine Ursache in dem Drehen des Generators hat, kann somit nicht in das Tragmodul und damit nicht in die Gondelverkleidung gelangen. Dadurch wird eine entsprechende Schallemission durch die Gondelverkleidung vermieden.

Vorzugsweise besteht außerdem zumindest teilweise eine elastische bedämpfte Verbindung zwischen dem Tragmodul und der Gondelverkleidung. Eine solche elastisch bedämpfte Verbindung kann so vorgesehen sein, dass die Tragkonstruktion der Gondelverkleidung starr an dem Tragmodul befestigt ist, weitere Stützstellen aber vorgesehen sind, die eine elastisch bedämpfte Verbindung vorsehen. Dadurch wird eine zu starre Geometrie zwischen der Gondelverkleidung und dem Tragmodul vermieden. Außerdem kann auch erreicht werden, dass Körperschall, der im Tragmodul auftritt, nicht oder zumindest nur bedämpft in die Gondelverkleidung übertragen wird. Dies kann auch für verbleibenden Körperschall der Fall sein, der von dem Maschinenträger in das Tragmodul noch übertragen wurde, also nicht vollständig von den Entkopplungsmitteln gedämpft werden konnte.

Gemäß einer Ausführungsform wird vorgeschlagen, dass die Schalensegmente aus Aluminium hergestellt sind, insbesondere in einem Tiefziehverfahren. Vorzugsweise werden dabei Dichtlippenprofile oder zumindest ein Dichtlippenprofil pro Schalensegment vorgesehen. Ein solches Dichtlippenprofil kann bspw. in einem Strangpressverfahren hergestellt und an dem Schalensegment angeordnet werden. In ein solches Dichtlippenprofil kann eine Dichtlippe mit einem Aufnahmeabschnitt eingesetzt, insbesondere eingeschoben werden. Das Schalensegment ist dann auf eine stabile Art und Weise mit einer solchen Dichtlippe ausgestaltet und kann somit eine besonders abdichtende Verbindung beim Zusammensetzen zur Gondelverkleidung herstellen. Diese abdichtende Verbindung kann zu benachbarten Schalensegmente erfolgen und/oder zu Elementen der Tragkonstruktion der Gondelverkleidung, wie bspw. Tragrippen. Eine solche Dichtlippe kann auch beim Transport die Segmente vor Beschädigung schützen.

Eine weitere Ausführungsform schlägt vor, dass die Gondelverkleidung einen rohrförmigen Verlängerungsabschnitt zum Umschließen eines oberen Abschnitts des Turms aufweist. Dieses Umschließen wird dabei so vorgesehen, dass eine Azimutbewegung der Gondel und damit der Gondelverkleidung und einschließlich dieser rohrförmigen Verlängerung weiterhin möglich ist. Hierdurch kann auf einfache Art und Weise an diesem drehbaren Übergang ein Schutz gegen Witterungseinflüsse erreicht werden. Vorzugsweise wird diese rohrförmige Verlängerung so kurz wie möglich gehalten, indem dort eine drehbare Abdichtung zum Turmvorgesehen wird, die es ermöglicht, dass insbesondere der rohrförmige Abschnitt nur so lang ist, dass er eine Wölbung der Gondelverkleidung überbrückt.

Ähnlich kann ein rohrförmiger Verlängerungsabschnitt am Spinner im Bereich der Rotorblattanschlüsse vorgesehen sein. Entsprechend umschließen diese rohrförmigen Abschnitte dort die jeweilige Blattwurzel. Insoweit sei angemerkt, dass der Spinner, der sich mit der Nabe dreht und im Grunde die Nabe abdeckt, unmittelbar am aerodynamischen Rotor oder elektrodynamischen Rotor befestigt sein kann. Dennoch kann dieser Spinner als Teil der Gondelverkleidung angesehen werden, ist aber nicht mit dem Tragmodul oder dem Maschinenträger unmittelbar verbunden, weil er sich dazu relativ dreht.

Vorzugsweise kann der Spinner bzw. eine Spinnerverkleidung, das gilt auf für eine Generatorverkleidung, zu der Gondelverkleidung als separates Element oder separater Abschnitt angesehen werden. Es wird als eine Ausführungsform vorgeschlagen, dass der Spinner bzw. die Spinnerverkleidung in eine Spinnerhauptverkleidung und eine Spinnerkappe unterteilt ist. Die Spinnerhauptverkleidung umgibt im Grunde einen Großteil der Nabe und andere Elemente, die sich zusammen mit der Nabe drehen, als eine umlaufende Schale, die nach vorne, also bestimmungsgemäß zum Wind hin, offen ist und nach hinten, nämlich zum Generator hin, ebenfalls offen ist. Nach vorne verjüngt sich die Spinnerhauptverkleidung und lässt eine entsprechend reduzierte, etwa kreisförmige Öffnung frei. Für diese ist eine Spinnerkappe vorgesehen, die etwa kreisförmig mit einer Wölbung, also kappenförmig ausgebildet ist. Gleichwohl wird für diese Kappe vorgeschlagen, sie in mehrere Segmente, insbesondere drei oder vier Segmente zu unterteilen. Auch diese Segmente sind so auszubilden, dass sie in einem Standardcontainer Platz finden, insbesondere durch die Tür eines Standardcontainers in diesen gelegt werden können. Auch für diese Segmente kann eine Sehne im Bereich eines Anschlussrandes, mit dem sie an der Spinnerhauptverkleidung zu befestigen wären bzw. anzusetzen wären, definiert werden, und die Teilung der Spinnerkappe ist so vorzusehen, dass diese Sehne dem Innenmaß eines Standardcontainers entspricht bzw. etwas kleiner ist, um darin liegend angeordnet zu werden. Diese Sehne eines solchen Segments an der Spinnerkappe ist somit ebenfalls etwas kürzer, als die innere Breite des Containers auszubilden. Vorzugsweise ist diese Sehne, was auch für die übrigen Sehnen gilt, so kurz zu wählen, dass sie quer durch eine Eingangstür eines Standcontainers passt. Auch die Berechnung dieser Sehne kann so vorgenommen werden, wie für die Berechnung der übrigen Sehnen erläutert wurde.

Erfindungsgemäß wird zudem eine Windenergieanlage vorgeschlagen mit einer Gondel gemäß wenigstens einer der vorstehend beschriebenen Ausführungsformen.

Außerdem wird ein Verfahren zum Herstellen einer Gondel einer Windenergieanlage vorgeschlagen. Dieses Verfahren schlägt vor, zunächst einen Maschinenträger bereitzustellen, ein Tragmodul herzustellen und schließlich das Tragmodul auf dem Maschinenträger aufzusetzen. Dieses Aufsetzen erfolgt in Kopplungsmitteln, wie sie vorstehend schon beschrieben wurden. Die Gondelverkleidung kann dann danach vorgenommen werden. Dadurch kann die Gondelverkleidung auch den Maschinenträger umschließen, was für das Tragmodul insoweit ausgeschlossen ist, als dadurch das Aufsetzen des fertigen Tragmoduls auf den Maschinenträger unmöglich werden würde.

Besonders bevorzugt wird das Tragmodul vor dem Aufsetzen auf den Maschinenträger mit elektrischen Steuereinrichtungen bestückt. Es wird also dadurch ein Installieren elektrischer Einrichtungen in der Gondel vermieden bzw. möglichst gering gehalten, wenn diese bereits auf dem Turmkopf montiert ist. Hierdurch kann die Bearbeitung erleichtert werden, weniger störanfällig in der Herstellung sein und auch ein aufwendiges Bereitstellen der Elemente in der Gondel auf dem Turmkopf kann vermieden werden. Die Elemente brauchen also nicht einzeln den Windenergieanlagenturm hinauf zur installierten bzw. montierten Gondel gehoben werden.

Nachfolgend wird die Erfindung anhand von Ausführungsbeispielen exemplarisch unter Bezugnahme auf die begleitenden Figuren näher erläutert.

| | |
|---|---|
| Figur 1 | zeigt eine Windenergieanlage in einer perspektivischen Ansicht. |
| Figur 2 | zeigt eine Ausführungsform einer erfindungsgemäßen Gondel in einer teilweisen Explosionsansicht. |
| Figur 3 | zeigt in einer perspektivischen Ansicht eine in einem Strangpressverfahren hergestellte Schiene mit Dichtungslippe. |
| Figur 4 | zeigt eine Schiene ähnlich der Figur 3 perspektivisch und in einem Ausschnitt und an einem ebenfalls im Ausschnitt dargestellten Schalensegment einer Gondelverkleidung. |
| Figur 5 | zeigt einen Teil einer Gondelverkleidung in einer teilweisen Explosionsdarstellung mit wenigstens einem Schalensegment gemäß Figur 4. |
| Figur 6 | zeigt einen Maschinenträger in einer perspektivischen Draufsicht. |
| Figur 7 | zeigt einen Ausschnitt eines Maschinenträgers gemäß Figur 6 mit Entkopplungsmitteln. |
| Figur 8 | zeigt einen Maschinenträger gemäß Figuren 6 und 7 mit einem Teil eines Tragmoduls. |
| Figur 9 | zeigt einen anderen Maschinenträger als die Figuren 6 bis 8 mit einem Teil eines Tragmoduls in einer perspektivischen Ansicht. |
| Figur 10 | zeigt einen Teil eines teilweise mit elektrischen Einrichtungen bestückten Tragmoduls in einer perspektivischen Ansicht. |
| Figur 11 | zeigt ein gegenüber Figur 10 erweitertes Tragmodul, das ebenfalls mit elektrischen Einrichtungen bestückt ist. |
| Figuren 12 bis 15 | veranschaulichen das Aufsetzen eines Tragmoduls gemäß Figur 11 auf einem Maschinenträger. |
| Figur 16 | zeigt ein auf einem Maschinenträger aufgesetztes Tragmodul gemäß Figur 15 mit weiteren Aufnahme- und Entkopplungselementen zum Aufnehmen einer Gondelverkleidung. |
| Figur 17 | zeigt einen Maschinenträger mit aufgesetztem Tragmodul gemäß Figur 16 mit teilweise angeordneter Verkleidung. |
| Figur 18 | zeigt einen Maschinenträger mit aufgesetztem Tragmodul in einer seitlichen Ansicht mit zwei schematisch dargestellten Personen zur Erläuterung mindestens des Größenvergleichs. |
| Figur 19 | zeigt eine weitere Ausführungsform eines Maschinenträgers mit Tragmodul und teilweise vorhandener Verkleidung in einer perspektivischen Darstellung mit teilweise durchsichtiger Verkleidung. |
| Figur 20 | zeigt eine teilweise Explosionsansicht einer Gondelhülle |

Figur 21  zeigt eine vorteilhafte Aufteilung der Elemente einer Gondelhülle zum Transport in Containern.

Figur 22  zeigt eine bisherige Aufteilung der Elemente einer Gondelhülle zum Transport.

Figur 23  erläutert die mathematische Aufteilung der Segmente.

Figur 24  zeigt eine weitere vorteilhafte Aufteilung der Elemente einer Gondelhülle zum Transport in einem Container.

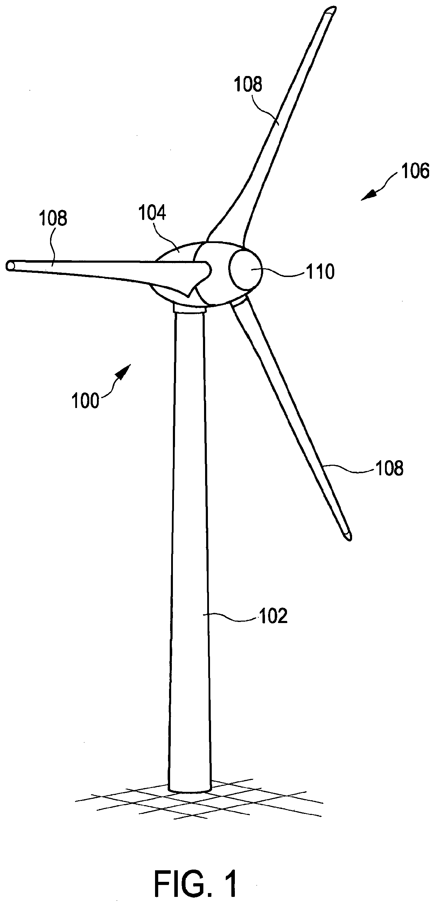

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

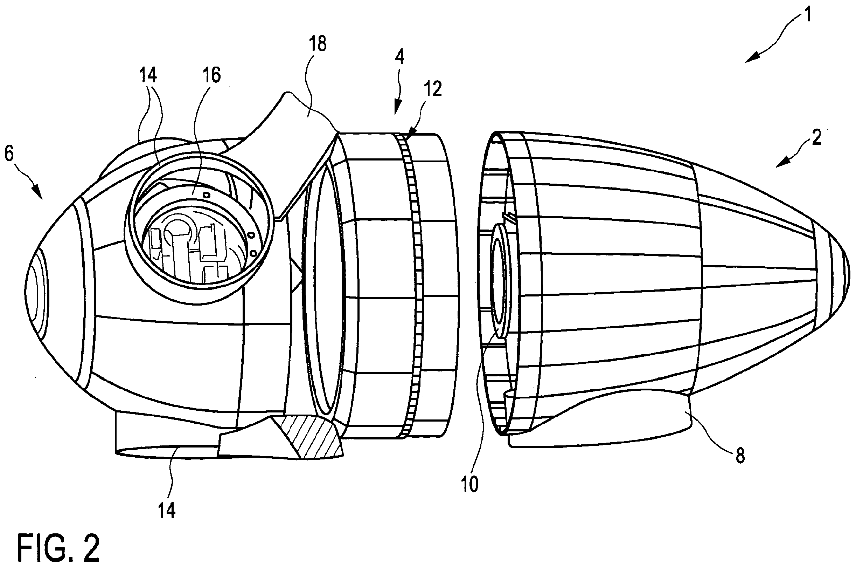

Figur 2 erläutert in der Explosionsdarstellung Elemente einer erfindungsgemäßen Gondel 1. Diese Gondel weist einen Hauptteil 2, einen Statorteil 4, der auch als Generatorteil bezeichnet werden kann, und einen Spinner 6 auf. Der Hauptteil 2 ist im Bereich eines Turm-Doms 8 auf einen Turm anzuordnen. Der Hauptteil 2 beinhaltet viele elektrische Einrichtungen und den Maschinenträger 10, der nur im Bereich eines Befestigungsflansches in dieser Darstellung zu erkennen ist.

Der Statorteil 4 bzw. Generatorteil 4 ist im Wesentlichen zylindrisch und umschließt im Wesentlichen einen dort anzuordnenden Generator einer getriebelosen Windenergieanlage, für die diese Gondel 1 vorgesehen ist. Im Falle eines Innenläufers kann dieser Statorteil 4 unmittelbar mit dem Stator verbunden werden. Eine Belüftung des Generators und Stators kann bspw. über Lüftungsöffnungen 12 erfolgen, die in dieser Figur 2 auch als umlaufende Kante bzw. im Bereich einer umlaufenden Kante vorgesehen sein können. Hier kann Luft nach außen und hinten, also nach rechts zum Hauptteil 2 hin ausströmen.

In dem Spinner 6 sind drei Blattdome 14 dargestellt, in deren Bereich Rotorblätter mit der Nabe 16 zu verbinden sind. Von dieser Nabe 16 ist im Wesentlichen durch die Öffnung eines Blattdoms 14 ein entsprechender Befestigungsflansch zum Befestigen eines Rotorblatts zu erkennen. Außerdem ist an jedem Blattdom 14 ein Blattfortsatz 18 dargestellt, der so ausgebildet ist, dass er das jeweilige Rotorblatt in seiner Form ergänzt, wenn das entsprechende Rotorblatt in seinem Betriebszustand ist, ohne aus dem Wind gedreht zu sein. Dies betrifft also eine Windenergieanlage mit Rotorblättern mit Blattwinkelverstellung. Die genannte Betriebsstellung ist insbesondere diejenige, die die Rotorblätter im Teillastbereich einnehmen.

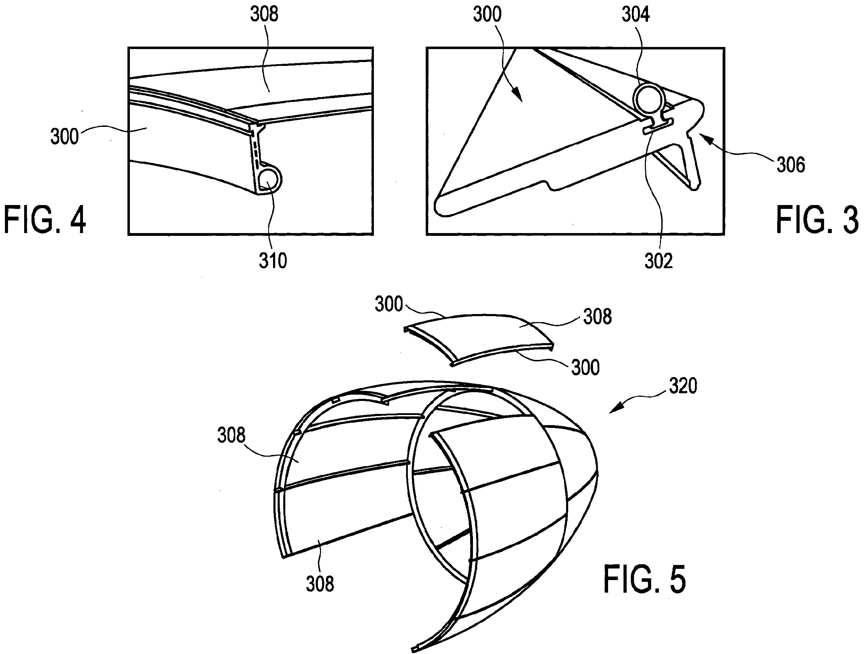

Figur 3 zeigt eine Strangpressschiene 300 aus Aluminium, die eine Dichtlippennut 302 mit darin eingesetzter Dichtlippe 304 zeigt. Diese Schiene 300 weist einen Befestigungsbereich 306 auf, in dem eine Befestigung an einem Verkleidungssegment 308, bzw. Schalensegment 308, das in Figur 4 in einem Ausschnitt dargestellt ist, vorgenommen werden soll. Die Schiene 300 kann dabei wie in Figur 4 gezeigt, einen weiteren Stabilisierungsabschnitt 310 aufweisen.

Figur 5 zeigt einen Teil einer Gondel, insbesondere einen Teil eines Hauptteils 320, das in der explosionsähnlichen Darstellung auch ein Verkleidungssegment 308 separat zeigt. An diesem Verkleidungssegment 308 sind zwei Schienen 300 zum abdichtenden Anordnen an benachbarten Verkleidungssegmenten 308 vorgesehen.

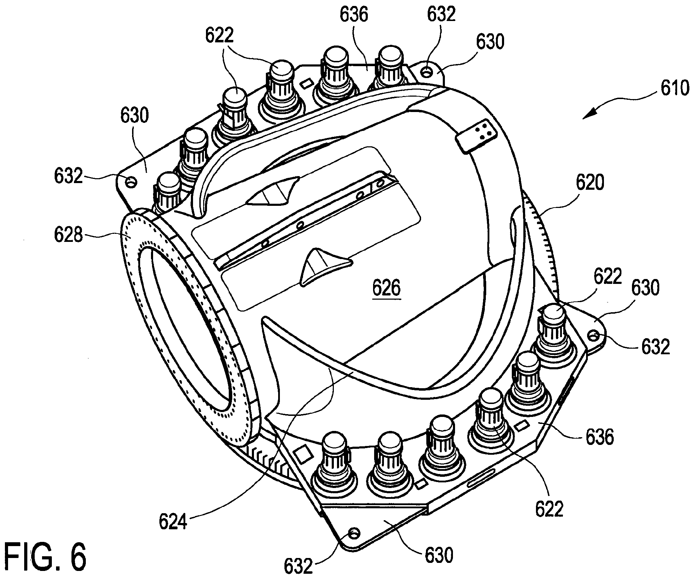

Figur 6 zeigt einen Maschinenträger 610 sowie einen an einem Turm anzuordnenden Azimutkranz, zu dem sich der Maschinenträger 610 relativ drehen soll. Zur Initiierung der Drehbewegung sind hier 12 Azimutmotoren 622 vorgesehen, die an dem Azimutkranz angreifen. Der gezeigte Maschinenträger 610 ist im Grunde aus zwei etwa rohrförmigen Teilabschnitten 624 und 626 zusammengesetzt und der Rohrabschnitt 626 weist einen Befestigungsflansch 628 auf zum Befestigen eines Generators bzw. zum Befestigen eines Achszapfens zum Tragen des Generators. Im zusammengesetzten Zustand der Windenergieanlage muss somit die Gewichtskraft des Generators, des aerodynamischen Rotors und einiger weiterer Kräfte die dort auftreten, von diesem Befestigungsflansch 628 über diese beiden rohrförmigen Abschnitte 624 und 626 zum Azimutkranz bzw. einem hier nicht näher spezifizierten Azimutlager übertragen werden. Sämtliche Geräusche, die hierbei auftreten, insbesondere Körperschall den der Generator erzeugt, werden über diesen Befestigungsflansch 628 in den Maschinenträger 610 eingeleitet.

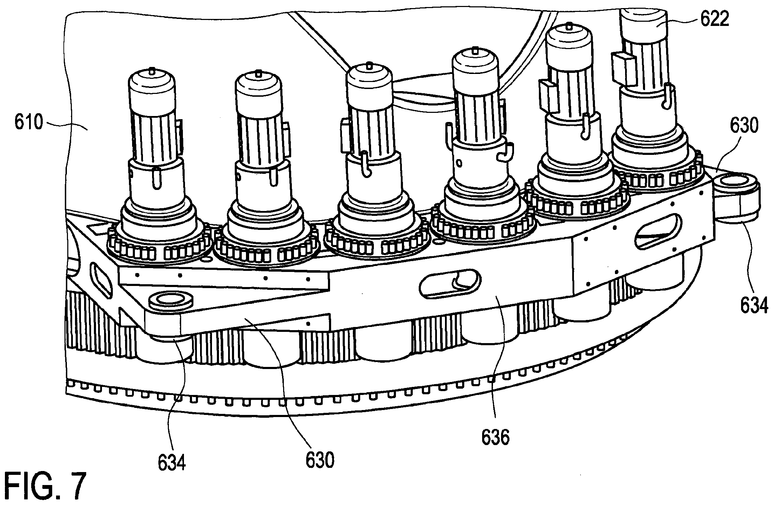

Zum Aufnehmen eines Tragmoduls weist dieser Maschinenträger 610 entsprechende Modulaufnahmen 630 auf. Solche Modulaufnahmen 630 können Angüsse oder Konsolen sein. Insbesondere können diese Modulaufnahmen 630 beim Gießen dieses Maschinenträgers 610 als Stahlgussteil mit angegossen werden. Diese Modulaufnahmen weisen zudem Aufnahmebohrungen 632 auf, die Entkopplungsmittel aufnehmen können, wie in der Figur 7 verdeutlicht wird.

Figur 7 zeigt einen Ausschnitt der Figur 6 in einer anderen Perspektive und zeigt dabei zwei der Modulaufnahmen 630, die dort als Angüsse vorgesehen sind. In den Aufnahmebohrungen 632, die in Figur 7 nicht mehr direkt zu erkennen sind, sitzen nun Entkopplungsmittel 634, die dort als elastisch dämpfende Einsätze vorgesehen sind, die bspw. aus einem Gummi oder Hartgummi bestehen können bzw. solches aufweisen können. Entscheidend ist ihre Position und damit auch die Position der Aufnahmebohrungen 632 und entsprechend auch der Modulaufnahmen 630, zum Aufnehmen und Tragen eines Tragmoduls in diesem Bereich, das nachfolgend noch beschrieben wird. Diese Modulaufnahmen 630 sind nämlich an einem unteren peripheren Fuß-Abschnitt 636 des Maschinenträgers 610 angeordnet. Dies ist in dem gezeigten Ausführungsbeispiel gleichzeitig ein Aufnahmebereich 636 für Azimutmotoren.

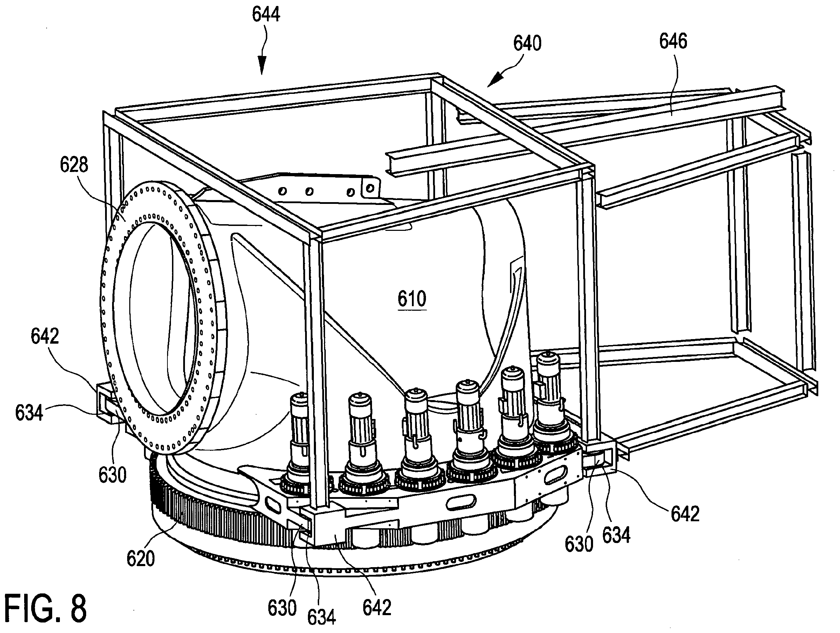

Figur 8 zeigt zu dem Maschinenträger der Figuren 6 und 7 die Anordnung eines Teils, allerdings wesentlichen Teils eines Tragmoduls 640. Dieses Tragmodul 640 ist über Entkopplungsabschnitte 642 im Bereich der Modulaufnahme 630 an diesen über die Entkopplungsmittel 634 befestigt. Es sind entsprechend den Positionen, die in Figur 6 zu sehen sind, vier solcher Entkopplungsabschnitte 642 vorgesehen, die insoweit als Befestigungsabschnitte 642 bezeichnet werden können. Die Darstellung der Figur 8 zeigt nur drei dieser Bereiche, in denen das Tragmodul 640 über die Befestigungsabschnitte 642 und die Entkopplungsmittel 634 an den Modulaufnahmen 630 und damit an dem Maschinenträger 610 befestigt ist.

Das Tragmodul 640 ist somit fest mit dem Maschinenträger 610 verbunden, gleichzeitig aber gegen die Übertragung von Körperschall vollständig entkoppelt. Das Tragmodul 640 kann dabei einen Basisabschnitt 644 aufweisen, der im Wesentlichen dem Maschinenträger 610 bzw. die beiden Rohrabschnitte 624 und 626 umgibt. Dieser Basisabschnitt 644 ist über die beschriebenen Entkopplungsmittel 634 an den Maschinenträger 610 befestigt. Der Basisabschnitt 644 weist dann als Erweiterung und auch zur Aufnahme eines Kranträgers 646 einen hinteren Abschnitt 648 auf.

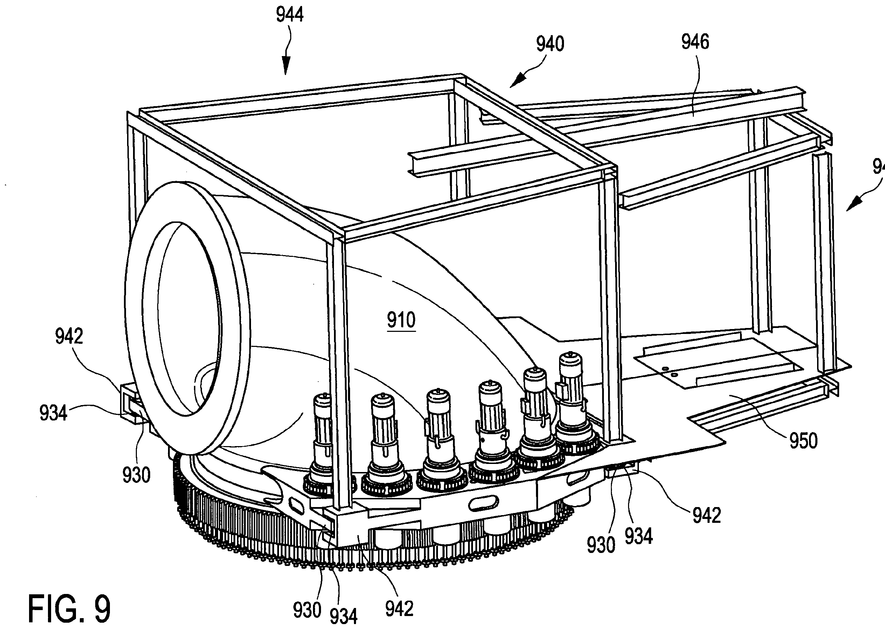

Figur 9 zeigt ganz ähnlich zu Figur 8 einen Maschinenträger 910 mit einem Tragmodul 940 mit einem Basisabschnitt 944 einem hinteren Teil 948 einschließlich Kranträger 946. Eine Befestigung mit Entkopplung erfolgt auch hier ganz ähnlich wie in Figur 8 gezeigt von Befestigungsabschnitten 942 über allerdings kaum erkennbare Entkopplungsmittel 934 zu Modulaufnahmen 930 des Maschinenträgers 910. Auch ansonsten ähneln sich die Tragmodule der Figuren 9 und 8 stark. Das Tragmodul 940 der Figur 9 zeigt zudem noch Bodenplatten 950, die aber ebenso auch für das Tragmodul 640 gemäß Figur 8 vorgesehen, in Figur 8 lediglich nicht dargestellt sind.

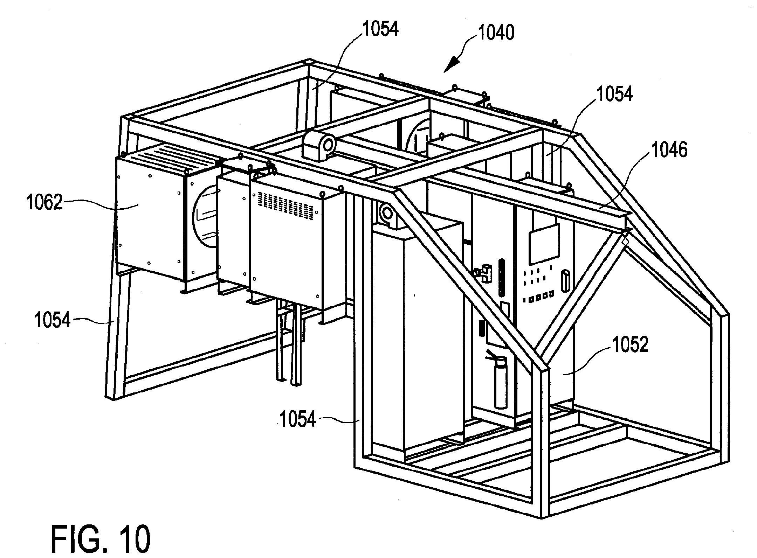

Figur 10 zeigt nun einen Teil eines Tragmoduls 1040, das gegenüber den Tragmodulen der Figuren 8 und 10 ähnlich, lediglich etwas anders im Bereich des Kranträges 1046 aufgebaut ist. Dieses Tragmodul 1040 ist mit diversen elektrischen Einrichtungen wie Steuerschränken 1052 bestückt. Das Tragmodul 1040 weist vier Hauptstützen 1054 auf, die auf einem Maschinenträger über Entkopplungsmittel und entsprechende Modulaufnahmen aufzusetzen sind. Dies wird in späteren Figuren noch erläutert.

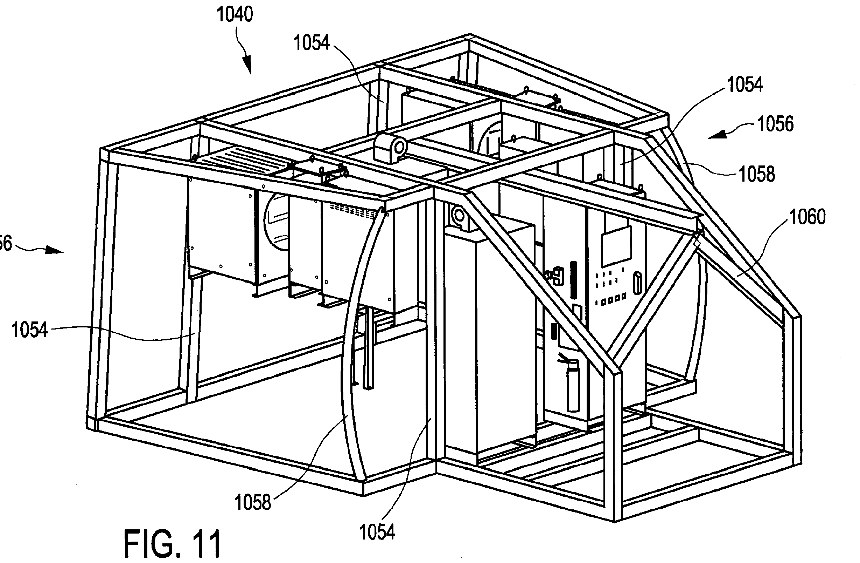

Figur 11 zeigt gegenüber der Figur 10 seitliche Erweiterungen 1056, die teilweise schon an eine Gondelverkleidung, also Außenform der herzustellenden Gondel angepasst sind. Besonders deutlich zeigen diese die beiden gebogenen Streben 1058, aber auch die Tatsache, dass die nun gezeigte Konstruktion des Tragmoduls 1040 nach hinten hin, nämlich zu den beiden winklig miteinander verbundenen Tragstreben 1060, die dort den Kranträger 1046 tragen, zuläuft.

Der in Figur 10 gezeigte Teil des Tragmoduls 1040, einschließlich der dargestellten Bestückung mit elektrischen Einrichtungen, wie dem Schaltschrank 1052, ist in seiner Größe so dimensioniert, dass er in einem üblichen Transportcontainer zum Transport auf der Straße passt. Somit kann dieser Teil gemäß Figur 10 in einem solchen normalen Container zu einem Richtungsort in der gezeigten Bestückung transportiert werden. Die Bestückung kann also bereits in der Werkshalle vorgesehen werden, einschließlich der elektrischen Verbindung der Elemente, soweit möglich. Die Erweiterung, die Figur 11 zeigt, ist auch für den Teil des Tragmoduls 1040 gemäß Figur 10 vorzusehen. Das kann aber dann, wenn der Transport mit diesem Standardcontainer erfolgt, an dem Errichtungsort erfolgen. Es wird noch darauf hingewiesen, dass bspw. das elektrische Modul 1062 seitlich über die Hauptstützen 1054 hinausragt. Dieses Hinausragen ist aber in einer Größe, die noch in den besagten Standardcontainer passt.

Alternativ kann bei einem Transport mit einem Schwerlaster das Tragmodul 1040 mit der seitlichen Erweiterung 1056, wie in Figur 11 gezeigt, vollständig in einen entsprechenden Container eines Schwerlasttransports aufgenommen werden. Wenn also ein Transport mit einem Schwerlaster erfolgt, kann das Tragmodul 1040 natürlich auch mit der Bestückung der elektrischen Elemente aber außerdem auch mit diesen seitlichen Erweiterungen in der Werkshalle vorbereitet und wie gezeigt Aufstellungsort transportiert werden.

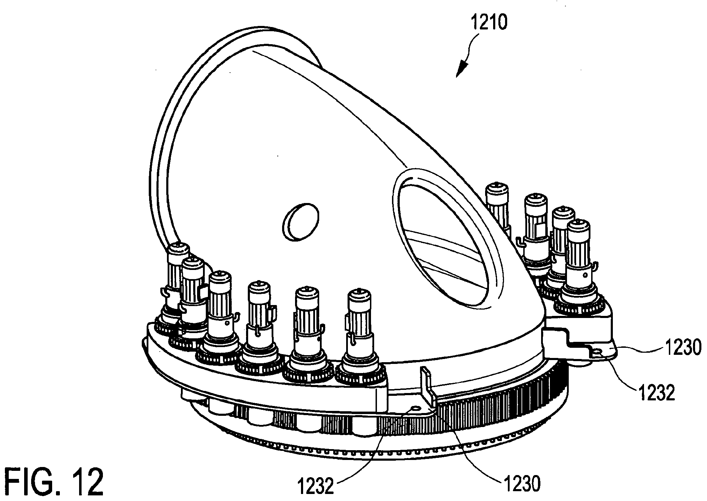

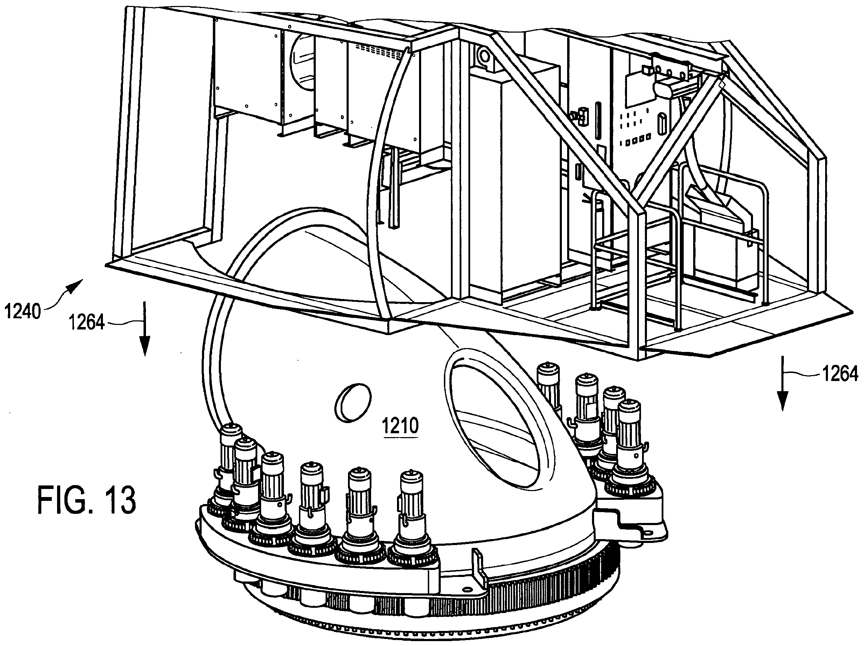

Die Figuren 12 bis 15 veranschaulichen nun das Aufsetzen eines Tragmoduls 1040 einschließlich der seitlichen Erweiterung 1056 gemäß Figur 11 auf einen Maschinenträger 1210. Der Maschinenträger 1210 ist ganz ähnlich dem Maschinenträger 910 gemäß Figur 9 ausgebildet, unterscheidet sich aber in einigen Details im Bereich der Modulaufnahme 1230 einschließlich Aufnahmebohrungen 1232. Figur 12 zeigt insoweit den vorbereiteten Maschinenträger 1210 und die Figur 13 zeigt eine erste Position, bei der das Tragmodul 1240 bereits durch einen Kran angeliefert und abgesenkt wird. Zwei Absenkpfeile 1264 veranschaulichen die Absenkrichtung des Tragmoduls 1240 auf den Maschinenträger 1210.

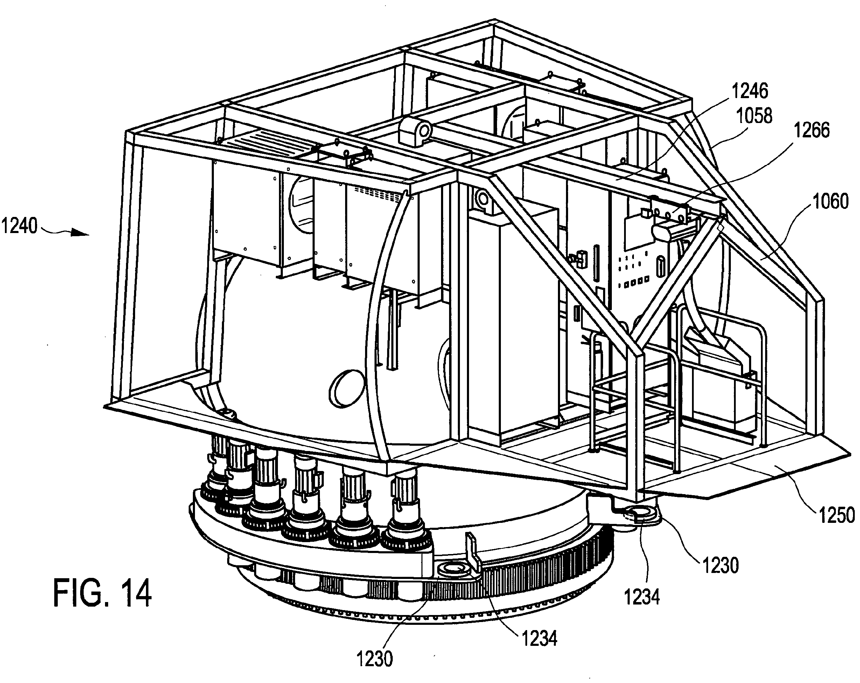

Figur 14 veranschaulicht dann, bei weiter abgesenktem und nun vollständig dargestelltem Tragmodul 1240, das Vorsehen von vier Entkopplungsmitteln 1234, von denen aufgrund der Perspektive in Figur 14 aber nur zwei dargestellt sind, die entsprechend im Bereich der Modulaufnahmen 1230 nun angeordnet sind.

Im Übrigen zeigt auch das Tragmodul 1240 Bodenplatten 1250 sowie einige weitere Details, wie bspw. ein Kranelement 1266 an dem Kranträger 1246. Diese Elemente sind für die Durchführung des hier veranschaulichten Aufbaus nicht nötig, aber es ist vorteilhaft, dass diese Elemente bereits vorinstalliert sind. Das Tragmodul 1240 ist also vorgefertigt und bestückt, einschließlich elektrischer Verbindungen der vorhandenen Elektroeinrichtungen untereinander, sofern dies schon möglich ist, und einschließlich der Bodenplatten 1250.

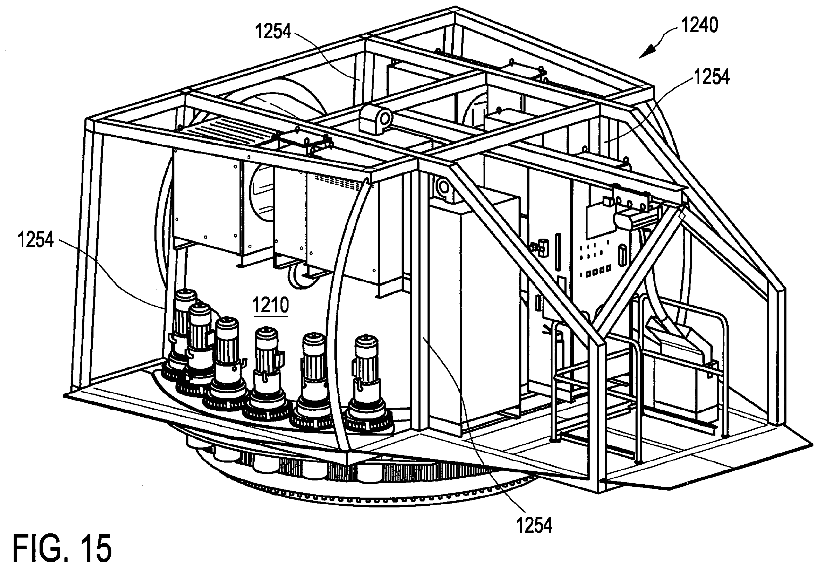

Figur 15 zeigt dann den fertigen Zustand des Zusammenbaus von Maschinenträger 1210 und Tragmodul 1240.

Aus den Figuren 12 bis 15 ist nun auch zu erkennen, dass das Tragmodul 1040 im Bereich der Hauptstützen 1254 auf den Modulaufnahmen 1230 und den Entkopplungsmitteln 1234 aufgesetzt ist.

Es kann also nicht nur eine vergleichsweise einfache Zusammensetzung dieser Elemente erfolgen, indem besonders das Tragmodul 1240 soweit wie möglich vorbereitet und bestückt ist, und dann erst aufgesetzt wird, sondern es kann hierbei gleichzeitig ein schallreduzierter Aufbau erfolgen, bei dem nämlich Körperschall von dem Maschinenträger 1210 nicht oder nur gering auf das Tragmodul 1240 übertragen wird, von dem aus er ggf. in eine Verkleidung gelangen und von dort abgestrahlt werden könnte. Dies wird verhindert oder zumindest erheblich verringert.

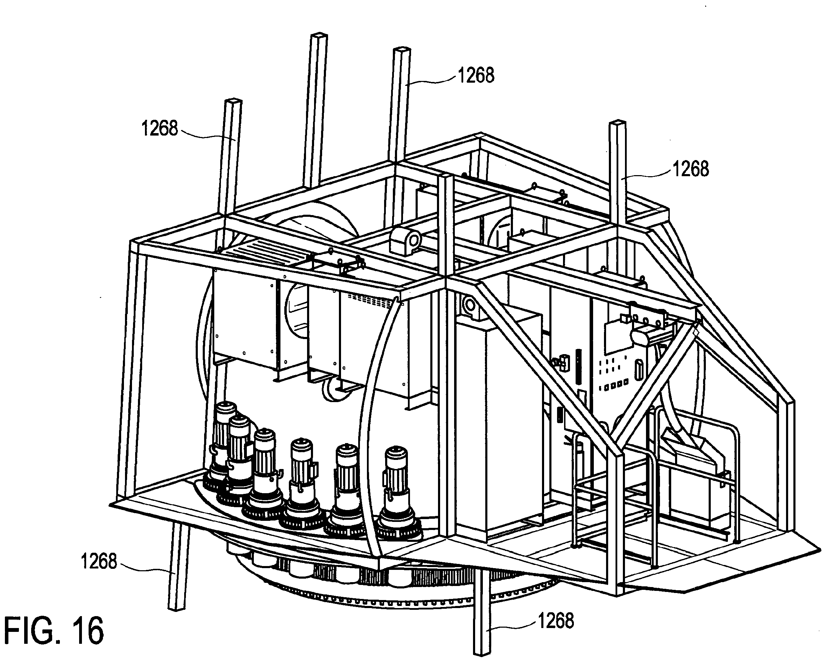

Figur 16 zeigt nun die Ergänzung von Entkopplungsstützen 1268 zum Befestigen und entkoppelnden Stützen einer Gondelverkleidung. Diese Entkopplungsstützen werden später angebracht, da sie im vorinstallierten Zustand keinen Platz mehr in dem Transportcontainer finden, selbst nicht im Schwerlasttransportcontainer. Die Anzahl dieser Entkopplungsstützen 1268 ist jedoch gering und sie können vergleichsweise einfach vor Ort angeordnet werden, um dann die Gondelverkleidung vorzusehen. Es wird darauf hingewiesen, dass das Installieren der Elektroeinrichtungen besonders aufwendig, kompliziert und ggf. fehlerträchtig sein kann, weil für die elektrischen Einrichtungen in vielerlei Hinsicht auch Funktionstests durchgeführt sollen oder müssen. Viele von diesen Funktionstests können nun bereits in einer Werkhalle vor dem Transport erfolgen.

Solchen Überlegungen insbesondere Tests sind für die Entkopplungsstützen 1268 nicht erforderlich, so dass ihre Installation bzw. Anordnung vor Ort insoweit vergleichsweise einfach und problemlos erfolgen kann.

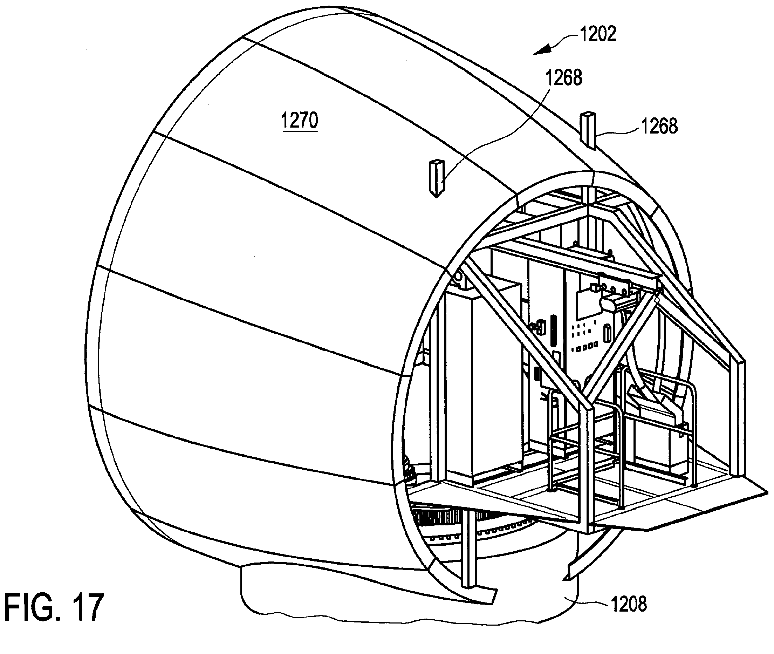

Figur 17 zeigt dann einen Teil einer Gondelverkleidung eines Hauptteils 1202 einer Gondel. Es ist zu erkennen, dass einige der Entkopplungsstützen 1268 durch die Verkleidung 1270 hindurch ragen. Dennoch können sie die Verkleidung 1270 teilweise stützen und sie können zum Anordnen äußerer Elemente, wie bspw. einer Flugbefeuerung oder Messeinrichtungen wie Anemometer, verwendet werden. Figur 17 zeigt zudem einen Turm-Dom 1208, der im Bereich zu einem Turm hin vorgesehen sind. Der Turm-Dom 1208 ist hier vergleichsweise kurz ausgestaltet und kann deswegen so kurz ausgestaltet werden, weil eine Belüftung der Gondel nicht über diesen Bereich des Turm-Doms 1208 erfolgt, so dass dieser im Wesentlichen gegen den Turm abgedichtet sein kann und entsprechend keine Strömungsstrecke für einströmende Luft vorsehen muss.

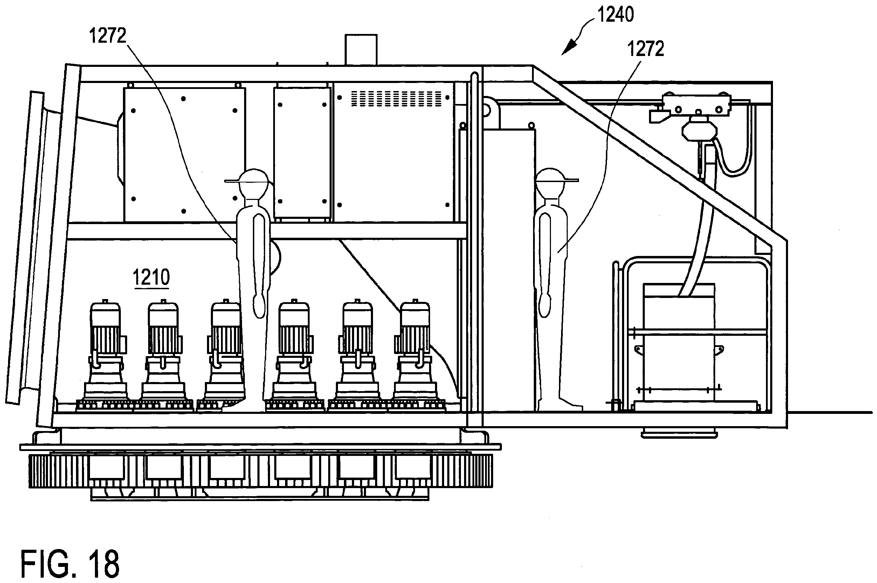

Figur 18 veranschaulicht einen Zusammenbau von Maschinenträger 1210 und Tragmodul 1240 und die veranschaulichten Personen 1272 veranschaulichen nicht nur die Größe des Aufbaus, sondern auch, wo Standflächen zum Betreten vorhanden sind.

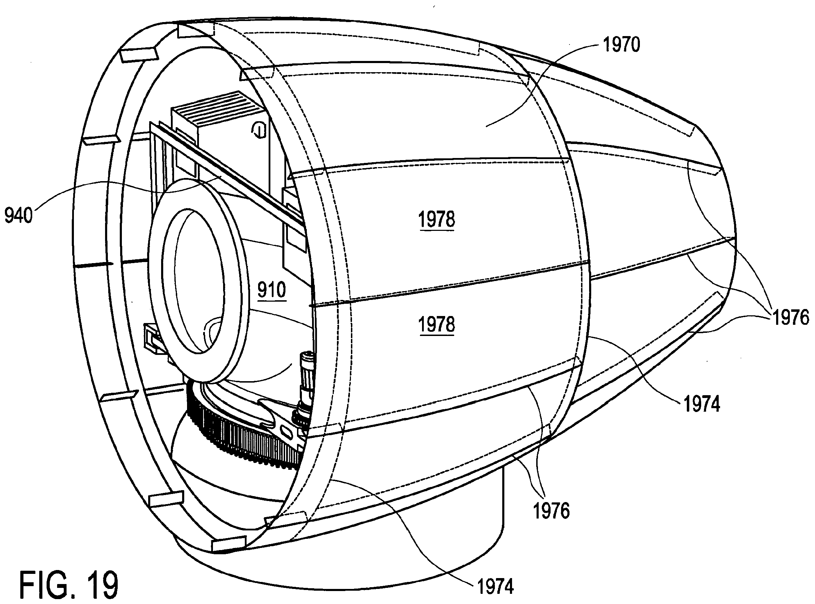

Die Figur 19 zeigt in einer perspektivischen Darstellung einen Maschinenträger 910 mit aufgesetztem und vollständig bestücktem Tragmodul 940, das gemäß der Zeichnung zumindest teilweise in einer Gondelverkleidung aufgenommen ist. Die Gondelverkleidung 1970 weist dabei umlaufende Spanten 1974 sowie dazwischen längsseitig angeordnete Spanten 1976 auf. Diese können ein Skelet oder Traggerippe für die Gondelverkleidung 1970 bilden, oder die längsseitigen Spanten können Teil der Verkleidungssegmente 1987 sein.

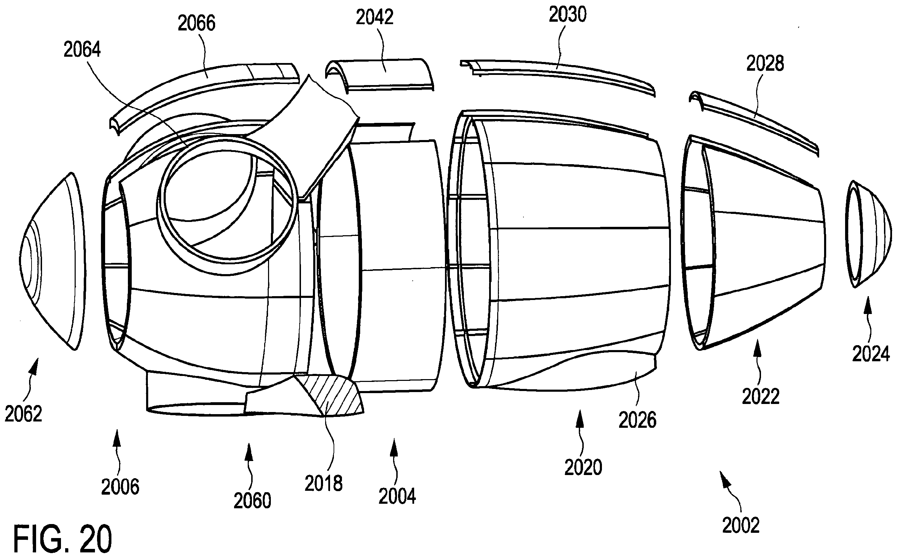

Figur 20 zeigt also in der Explosionsdarstellung eine Gondel 2001, von der hier nur die Hülle dargestellt ist. Diese Hülle oder Gondelhülle setzt sich zusammen aus grundsätzlich drei Bereichen, nämlich der Gondelverkleidung 2002, der Generatorverkleidung 2004 und der Spinnerverkleidung 2006. Die Gondelverkleidung 2002 ist unterteilt in eine vordere Gondelverkleidung 2020, eine hintere Gondelverkleidung 2022 und eine ganz hinten abschließende Gondelkappe 2024.

Die Spinnerverkleidung 2006 ist weiter unterteilt in eine Spinnerhauptverkleidung 2060 und eine Spinnerkappe 2062. Die Generatorverkleidung 2004 ist in Längsrichtung, also von der Gondelkappe 2024 zur Spinnerkappe 2062 nicht weiter unterteilt.

Bis auf die beiden Kappen, also die Gondelkappe 2024 und die Spinnerkappe 2062 sind die einzelnen Verkleidungsabschnitte soweit möglich in einzelne längsgerichtete Segmente unterteilt, die jeweils die Schalensegmente sind. Die Unterteilung in längsgerichtete Segmente wird soweit wie möglich vorgenommen und ist dabei lediglich in der Spinnerhauptverkleidung 2060 im Bereich der Blattdurchführungen oder Blattdome 2064 unterbrochen und die vordere Gondelverkleidung 2020 ist im Bereich der Turmdurchführung bzw. des Turm-Doms 2026 unterbrochen. Ansonsten werden jeweils gleiche längsgerichtete Segmente verwendet.

Die hintere Gondelverkleidung 2022 weist dafür acht hintere Gondelsegmente 2028 auf. Die vordere Gondelverkleidung 2020 weist neun vordere Gondelsegmente 2030 auf und die Generatorverkleidung 2004 ist in sechs Generatorsegmente 2042 unterteilt. Zwischen den Blattdomen 2064 weist die Spinnerhauptverkleidung 2060 jeweils ein Spinnersegment 2066 auf. Insgesamt sind also drei Spinnersegmente 2066 vorhanden.

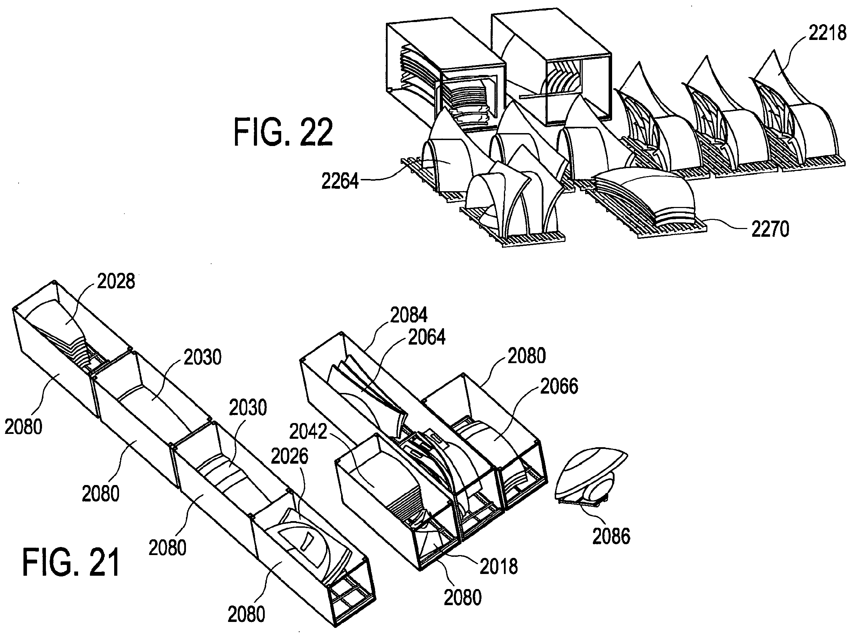

Figur 21 zeigt sechs 20-Fuß-Container 2080 und einen 40-Fuß-Container 2084. In diesem insgesamt sieben Containern sind sämtliche Elemente, die in Figur 20 dargestellt sind, enthalten, bis auf die beiden Kappen. Für die Gondelkappe 2024 und die Spinnerkappe 2062 ist ein separates Transportgestell 2086 vorgesehen. Im Übrigen sind an der Spinnerhauptverkleidung 2060 gemäß Figur 20 noch drei Blattfortsätze 2018 dargestellt, die so ausgebildet sind, dass sie das jeweilige Rotorblatt in seiner Form ergänzen, wenn es in seinem Betriebszustand ist, ohne aus dem Wind gedreht zu sein, also insbesondere im Teillastbereich bzw. Teillastbetrieb. Diese Blattfortsätze 2018 sind abnehmbar und können im abgenommenen Zustand in einem Container untergebracht werden, wie die Figur 21 zeigt.

Ansonsten sind in Figur 21 in den vier in Reihe dargestellten Containern in einem die hinteren Gondelsegmente 2028 in einem Stapel gelagert. Die vorderen Gondelsegmente 2030 sind in zwei weiteren Containern gelagert. Segmente mit dem Turm-Dom 2026 sind in einem noch weiteren Container gelagert.

Der Container, in dem bereits die abnehmbaren Blattfortsätze 2018 gelagert sind, enthält auch die Generatorsegmente 2042.

Der einzige Langcontainer, also 40-Fuß-Container 2084, umfasst sämtliche Blattdomsegmente 2064. Die drei Spinnersegmente 2066 sind schließlich in dem letzten noch nicht erläuterten Container 2080 untergebracht.

Figur 22 zeigt zum Vergleich eine bisherige Art und Weise des Transports, bei dem auch zwei 20-Fuß-Container vorgesehen sind, die übrigen Segmente aber auf Transportpaletten transportiert werden müssen. Dies ist nicht zuletzt auch dadurch begründet, dass Segmente mit nicht abnehmbaren Blattfortsätzen 2218 transportiert werden mussten. Außerdem sind die Domsegmente 2264 durch die langen Dome schwierig zu transportieren. Auch die ungünstige Aufteilung anderer Segmente machen einen solchen Transport auf Paletten 2270 erforderlich.

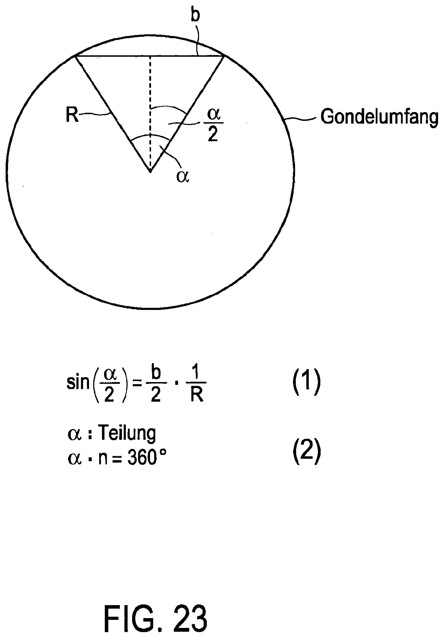

Fig. 23 erläutert die mathematische Aufteilung der Segmente. Demnach besteht folgender Zusammenhang zwischen der Sehne b, dem Radius R und der Teilung a:

$$\sin\left(\frac{\alpha}{2}\right) = \frac{b}{2} \times \frac{1}{R}$$

Außerdem muss die Anzahl der Segmente, unter der Annahme, dass diese einen vollständigen Kreis bilden, multipliziert mit dem Winkel α 360° ergeben:

$\alpha$ : *Teilung*
$\alpha \cdot n = 360°$

Die Anzahl n ist so zu wählen, dass die Sehnenlänge b nach den beiden Gleichungen (1) und (2) noch in den Seecontainer passt, also etwas kleiner als die Innenbreite ist.

Für die Figur 20 ergibt sich, wenn keine Dom-Segmente zu berücksichtigen wären, 9 Segmente mit einer Teilung von 40° für die Spinnersegmente 2066 der Spinnerhauptverkleidung 2060, 12 Segmente mit einer Teilung von 30° für die vorderen Gondelsegmente 2030 der vorderen Gondelverkleidung 2020 und 8 Segmente mit einer Teilung von 45° für die hinteren Gondelsegmente 2028 der hinteren Gondelverkleidung 2022.

Die Dome verändern dabei nicht die Teilung, sondern nur jeweils die Anzahl der gleichen Segmente.

Insbesondere müssen die Segmente durch eine Öffnungsweite der Tür des Containers passen. Die beträgt 2,343 Meter und die Höhe der Türöffnung betrag 2,28 Meter.

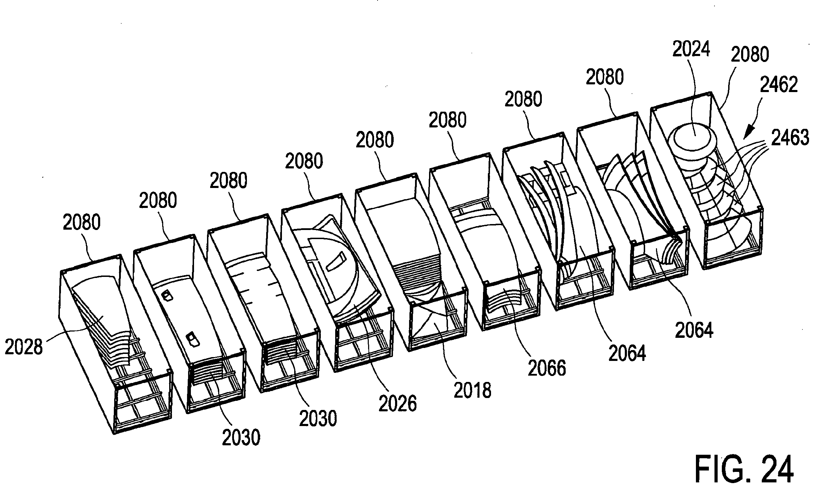

Figur 24 entspricht in vielen Details der Darstellung der Figur 21. Insoweit wird auf diese Figur 21 und die Erläuterungen dazu verwiesen. Insoweit sind auch viele der Bezugszeichen identisch. Abweichend zu der Ausführungsform der Figur 21 zeigt die Figur 24 eine Ausführungsform, bei der eine Spinnerkappe 2462 in vier Spinnerkappensegmente 2463 aufgeteilt und zum Transport zerlegt und in dem rechts dargestellten Container 2080 zum Transport angeordnet sind. In demselben Container 2080 mit diesen Spinnerkappensegmenten 2463 ist auch die Gondelkappe 2024 angeordnet.

Außerdem sieht diese Ausführungsform gemäß Figur 24 vor, nur 20-Fuß-Container 2080 zu verwenden, so dass der 40-Fuß-Container 2084 der Figur 21 durch zwei 20-Fuß-Container 2080 ersetzt werden konnte. Es sind nun neun 20-Fuß-Container vorgesehen und es konnte dabei auch auf das separate Transportgestell 2086, das in Figur 21 dargestellt ist, verzichtet werden. Sämtliche Elemente der Gondelhülle sind nun in neun 20-Fuß-Containern untergebracht und können somit gut und insbesondere mit gutem Schutz gegen Witterungseinflüsse transportiert werden. Auch etwaige Beschädigungen durch den Transport können hierdurch vermieden werden, deren Risiko zumindest reduziert werden.

**Patentansprüche**

1. Gondel (1) einer Windenergieanlage (100), wobei die Windenergieanlage (100) einen Generator zum Erzeugen elektrischer Energie aus Wind aufweist, und die Gondel (1) umfasst

   - einen Maschinenträger (10,610) zum Tragen des Generators auf einem Turm,
   - ein Tragmodul (640) zum Aufnehmen elektrischer Steuereinrichtungen und
   - eine Gondelverkleidung (1270) zum Schützen des Tragmoduls (640) und des Maschinenträgers (10,610) vor Witterungseinflüssen, wobei das Tragmodul (640) und/oder die Gondelverkleidung (1270) über Entkopplungsmittel (634) mit dem Maschinenträger (10,610) verbunden sind, so dass darüber eine elastisch bedämpfte Verbindung mit dem Maschinenträger (10,610) besteht.

2. Gondel (1) einer Windenergieanlage (100) nach Anspruch 1,
**dadurch gekennzeichnet, dass**

- die Gondelverkleidung über Entkopplungsmittel an dem Tragmodul befestigt ist,
- eine Spinnerverkleidung über Entkopplungsmittel an einem Rotor des Generators bzw. einem Läufer des Generators befestigt ist und/oder
- eine Generatorverkleidung über Entkopplungsmittel an einem Stator des Generators befestigt ist und/oder
- das die Spinnerverkleidung für jedes Rotorblatt einen lösbaren Blattfortsatz aufweist.

3. Gondel (1) einer Windenergieanlage (100) nach Anspruch 1 oder 2,
**dadurch gekennzeichnet, dass**
das Tragmodul (640) über die Entkopplungsmittel (634) von dem Maschinenträger
(10,610) getragen wird, insbesondere darüber ausschließlich getragen wird und/oder die Entkopplungsmittel (634) so ausgelegt sind, dass sie das Übertragen von Körperschall von dem Maschinenträger (10,610) zum Tragmodul (634) verhindern, die Übertragung zu mindestens signifikant dämpfen.

4. Gondel (1) einer Windenergieanlage (100) nach einem der vorstehenden Ansprüche,
**dadurch gekennzeichnet, dass**
das Tragmodul (640) und/oder der Maschinenträger (10,610) dazu ausgebildet sind, dass das Tragmodul (640) in einem mit den Steuereinrichtungen bestücktem Zustand auf den Maschinenträger aufgesetzt bzw. in dafür vorgesehene Aufnahmen der Entkopplungsmittel eingesetzt zu werden.

5. Gondel (1) einer Windenergieanlage (100) nach einem der vorstehenden Ansprüche,
**dadurch gekennzeichnet, dass**
die Entkopplungsmittel (634) für die Befestigung des Tragmoduls in einem peripheren Bereich, insbesondere Fuß-Bereich des Maschinenträgers (10,610) in der Nähe eines Azimutlagers angeordnet sind, insbesondere in einem Abschnitt, der auch Azimutantriebe zum Durchführen einer Azimutverstellung aufnimmt.

6. Gondel (1) einer Windenergieanlage (100) nach einem der vorstehenden Ansprüche,
**dadurch gekennzeichnet, dass**
die Gondelverkleidung (1270), die Spinnerverkleidung und/oder die Generatorverkleidung jeweils ein Traggerüst (1974) und darin aufgenommene Schalensegmente (308) aufweisen und insbesondere die Schalensegmente generalisiert, so dass jeweils mehrere gleiche Schalensegmente vorgesehen sind, und die Schalensegmente dabei so dimensioniert sind, dass sie für einen Transport in 20-Fuß (6m) und/oder 40-Fuß-Containern (12m) untergebracht werden können.

7. Gondel (1) einer Windenergieanlage (100) nach einem der vorstehenden Ansprüche,
**dadurch gekennzeichnet, dass**
die Gondel eine Längsachse aufweist, die eine Längsrichtung definiert und insbesondere einer Drehachse des Generators entspricht, und einige oder alle der Schalensegmente in Längsrichtung ausgerichtet sind mit zwei seitlichen, gleich großen Längsrändern, einem kürzeren und einem längeren Querrand, oder zwei gleichen Querrändern, wobei die Querränder jeweils einem Kreisabschnitt des Gondelumfangs der Gondel in der betreffenden Position entsprechen, und wobei die Querränder jeweils eine Sehne aufweisen, wobei die Gondel in Längsrichtung in Abschnitte unterteilt ist, und abschnittweise die Anzahl der Schalensegmente so ausgewählt wird und/oder die Schalensegmente so dimensioniert werden, dass die Sehne des längeren Querrandes, und/oder bei gleichem Querrand die Länge des einen Querrandes oder des Längsrandes der innen verfügbaren Breite eines Standardseecontainers (20-Fuß (6m) oder 40-Fuß-Container (12m)) entspricht, so dass jedes dieser Segmente in den Container gelegt werden kann.

8. Gondel (1) einer Windenergieanlage (100) nach einem der vorstehenden Ansprüche,
**dadurch gekennzeichnet, dass**
die Gondelverkleidung (1270) an dem Tragmodul (640) befestigt ist und davon getragen wird.

9. Gondel (1) einer Windenergieanlage (100) nach einem der vorstehenden Ansprüche,

**dadurch gekennzeichnet, dass**

eine elastisch bedämpfte Verbindung zwischen dem Tragmodul (640) und der Gondelverkleidung (1270) besteht.

**10.** Gondel (1) einer Windenergieanlage (100) nach einem der vorstehenden Ansprüche,
**dadurch gekennzeichnet, dass**
Schalensegmente, bzw. die Schalensegmente (308) der Gondelverkleidung (1270) im Wesentlichen aus Aluminium insbesondere in einem Tiefziehverfahren hergestellt werden und jeweils wenigstens ein Dichtlippenprofil (302) zum Aufnehmen einer Dichtlippe (304) zum abdichtenden Zusammensetzten mit anderen Schalensegmenten und/oder an einem bzw. dem Traggerüst (1974) vorhanden ist und jeweils eine Dichtlippe (304) aufweist.

**11.** Gondel (1) einer Windenergieanlage (100) nach einem der vorstehenden Ansprüche,
**dadurch gekennzeichnet, dass**
die Gondelverkleidung (1270) einen rohrförmigen Verlängerungsabschnitt zum Umschließen eines oberen Abschnitts des Turms aufweist und/oder dass ein Spinnerabschnitt (6) vorgesehen ist, der eine Rotornabe umschließt und jeweils einen rohrförmigen Verlängerungsabschnitt zum Umschließen eines Wurzelbereichs eines Rotorblattes aufweist.

**12.** Gondel einer Windenergieanlage nach einem der vorstehenden Ansprüche,
**dadurch gekennzeichnet, dass**
eine bzw. die Spinnerverkleidung eine Spinnerhauptverkleidung und eine daran angeordnete Spinnerkappe aufweist, um die Spinnerverkleidung nach vorne abzuschließen, wobei die Spinnerkappe in mehrere gleich große Segmente unterteilt ist, insbesondere so, dass diese in einem Standard 20-Fuß-Container (6m) oder 40-Fuß-Container (12m) liegend untergebracht werden können.

**13.** Windenergieanlage (100) mit einer Gondel (1) nach einem der vorstehenden Ansprüche.

**14.** Verfahren zum Herstellen einer Gondel (1) einer Windenergieanlage (100) umfassen die Schritte:

- Bereitstellen eines Maschinenträgers (10),
- Herstellen eines Tragmoduls (640) zum Aufnehmen elektrischer Steuereinrichtungen und
- Aufsetzen des Tragmoduls (640) auf den Maschinenträger (10) in Entkopplungsmittel (634).

**15.** Verfahren nach Anspruch 14,
**dadurch gekennzeichnet, dass**
das Tragmodul vor dem Aufsetzen auf den Maschinenträger mit den elektrischen Steuereinrichtungen bestückt ist.

**Claims**

**1.** Nacelle (1) of a wind turbine (100), the wind turbine (100) having a generator for generating electrical energy from wind, and the nacelle (1) comprising

- a mainframe (10, 610) for carrying the generator on a tower,
- a carrier module (640) for accommodating items of electrical control equipment, and
- a nacelle casing (1270) for protecting the carrier module (640) and the mainframe (10, 610) against effects of weather,

the carrier module (640) and/or the nacelle casing (1270) being connected to the mainframe (10) by means of decoupling means (634), such that there exists thereby an elastically damped connection to the mainframe (10, 610)).

**2.** Nacelle (1) of a wind turbine (100) according to Claim 1,
**characterized in that**

- the nacelle casing is fastened to the carrier module by means of decoupling means,
- a spinner casing is fastened to a rotor of the generator, or generator-rotor, by means of decoupling means, and/or
- a generator casing is fastened to a stator of the generator by means of decoupling means, and/or
- the spinner casing has a separable blade extension for each rotor blade.

3. Nacelle (1) of a wind turbine (100) according to Claim 1 or 2,
**characterized in that**
the carrier module (640) is carried by the mainframe (10, 610) by means of the decoupling means (634), in particular is carried exclusively by means thereof, and/or the decoupling means (634) are designed such that they prevent structure-borne sound from being transmitted from the mainframe (10, 610) to the carrier module (634), to at least significantly damp the transmission.

4. Nacelle (1) of a wind turbine (100) according to any one of the preceding claims,
**characterized in that**
the carrier module (640) and/or the mainframe (10, 610) are/is designed for the carrier module (640) to be mounted on the mainframe, or inserted in receivers of the decoupling means provided for this purpose, when it has been equipped with the items of control equipment.

5. Nacelle (1) of a wind turbine (100) according to any one of the preceding claims,
**characterized in that**
the decoupling means (634) for fastening the carrier module in a peripheral region, in particular foot region, of the mainframe (10, 610) are disposed close to a yaw bearing, in particular in a portion that also accommodates yaw drives for effecting a yaw adjustment.

6. Nacelle (1) of a wind turbine (100) according to any one of the preceding claims,
**characterized in that**
the nacelle casing (1270), the spinner casing and/or the generator casing each have a support frame (1974) and shell segments (308) accommodated therein, and in particular the shell segments are generalized, such that in each case a plurality of like shell segments are provided, and the shell segments in this case are dimensioned such that they can be accommodated for transport in 20-foot (6m) and/or 40-foot containers (12m).

7. Nacelle (1) of a wind turbine (100) according to any one of the preceding claims,
**characterized in that**
the nacelle has a longitudinal axis that defines a longitudinal direction and that, in particular, corresponds to a rotation axis of the generator, and some or all of the shell elements are oriented in the longitudinal direction with two lateral longitudinal edges of the same size, a shorter and a longer transverse edge, or two like transverse edges, the transverse edges each corresponding to a segment of the circumference of the nacelle in the respective position, and the transverse edges each having a chord, the nacelle being divided into portions in the longitudinal direction, and the number of shell segments being selected and/or the shell segments being dimensioned such that the chord of the longer transverse edge and/or, in the case of a like transverse edge, the length of the one transverse edge or of the longitudinal edge corresponding to the available inside width of a standard shipping container (20-foot (6m) or 40-foot container (12m)), such that each of these segments can be laid in the container.

8. Nacelle (1) of a wind turbine (100) according to anyone of the preceding claims,
**characterized in that**
the nacelle casing (1270) is fastened to the carrier module (640) and is carried thereby.

9. Nacelle (1) of a wind turbine (100) according to any one of the preceding claims,
**characterized in that**
there is an elastically damped connection between the carrier module (640) and the nacelle casing (1270).

10. Nacelle (1) of a wind turbine (100) according to any one of the preceding claims,
**characterized in that**
shell segments, or the shell segments (308) of the nacelle casing (1270), are produced substantially from aluminium, in particular by a deep-drawing process, and in each case there is at least one sealing lip profile (302) for receiving a sealing lip (304) for the purpose of being assembled in a sealing manner with other shell segments and/or on a, or the, support frame (1974), and each has a sealing lip (304).

11. Nacelle (1) of a wind turbine (100) according to any one of the preceding claims,
**characterized in that**
the nacelle casing (1270) has a tubular extension portion for enclosing an upper portion of the tower, and/or a spinner portion (6) is provided, which encloses the rotor hub, and in each case has a tubular extension portion for enclosing a root region of a rotor blade.

**12.** Nacelle of a wind turbine according to any one of the preceding claims,
**characterized in that**
a, or the, spinner casing has a spinner main casing and, disposed thereon, a spinner cap for forwardly closing off the spinner casing, the spinner cap being divided into a plurality of segments of the same size, in particular such that the latter can be accommodated in a lying position in a standard 20-foot container (6m) or 40-foot container (12m).

**13.** Wind turbine (100), having a nacelle (1) according to any one of the preceding claims.

**14.** Method for producing a nacelle (1) of a wind turbine (100), comprising the steps:

- providing a mainframe (10),
- producing a carrier module (640) for accommodating items of electrical control equipment, and
- mounting the carrier module (640) on to the mainframe (10), into decoupling means (634).

**15.** Method according to Claim 14,
**characterized in that**
the carrier module is equipped with items of electrical control equipment before being mounted on to the mainframe.


## Revendications

**1.** Nacelle (1) d'une éolienne (100), dans laquelle l'éolienne (100) présente un générateur pour la génération d'énergie électrique à partir du vent, et la nacelle (1) comprend

- un support de machine (10, 610) pour le support du générateur sur une tour,
- un module porteur (640) pour la réception de dispositifs de commande électriques et
- un carénage de nacelle (1270) pour la protection du module porteur (640) et du support de machine (10, 610) contre les influences atmosphériques, dans laquelle le module porteur (640) et/ou le carénage de nacelle (1270) sont reliés par le biais de moyens de découplage (634) au support de machine (10, 610) de sorte qu'une liaison amortie élastiquement avec le support de machine (10, 610) existe par ce biais.

**2.** Nacelle (1) d'une éolienne (100) selon la revendication 1,
**caractérisée en ce que**

- le carénage de nacelle est fixé par le biais de moyens de découplage au module porteur,
- un carénage est fixé par le biais de moyens de découplage à un rotor du générateur ou un induit du générateur et/ou
- un carénage de générateur est fixé par le biais de moyens de découplage à un stator du générateur et/ou
- que le carénage pour chaque pale de rotor présente un prolongement de pale détachable.

**3.** Nacelle (1) d'une éolienne (100) selon la revendication 1 ou 2,
**caractérisée en ce que**
le module porteur (640) est porté par le biais des moyens de découplage (634) par le support de machine (10, 610), en particulier est porté exclusivement par ceux-ci, et/ou les moyens de découplage (634) sont conçus de sorte qu'ils empêchent la transmission de bruit structurel du support de machine (10, 610) au module porteur (634) qui amortissent la transmission au moins de manière significative.

**4.** Nacelle (1) d'une éolienne (100) selon l'une quelconque des revendications précédentes,
**caractérisée en ce que**
le module porteur (640) et/ou le support de machine (10, 610) sont réalisés afin que le module porteur (640) soit placé dans un état équipé avec les dispositifs de commande sur le support de machine ou qu'il soit inséré dans des logements prévus à cet effet des moyens de découplage.

**5.** Nacelle (1) d'une éolienne (100) selon l'une quelconque des revendications précédentes,
**caractérisée en ce que**
les moyens de découplage (634) sont disposés pour la fixation du module porteur dans une zone périphérique, en particulier une zone de pied du support de machine (10, 610) à proximité d'un palier azimutal, en particulier dans une section qui reçoit aussi des entraînements azimutaux pour la réalisation d'un réglage azimutal.

**6.** Nacelle (1) d'une éolienne (100) selon l'une quelconque des revendications précédentes,
**caractérisée en ce que**
le carénage de nacelle (1270), le carénage et/ou le carénage de générateur présentent respectivement un bâti porteur (1974) et des segments de coque (308) reçus dans celui-ci et généralisent en particulier les segments de coque de sorte que respectivement plusieurs segments de coque identiques soient prévus, et les segments de coque sont dimensionnés de sorte qu'ils puissent être logés pour un transport dans des conteneurs de 20 pieds (6 m) et/ou de 40 pieds (12 m) .

**7.** Nacelle (1) d'une éolienne (100) selon l'une quelconque des revendications précédentes,
**caractérisée en ce que**
la nacelle présente un axe longitudinal qui définit un sens longitudinal et correspond en particulier à un axe de rotation du générateur, et certains ou tous les segments de coque sont orientés dans le sens longitudinal avec deux bords longitudinaux latéraux de même taille, des bords transversaux plus court et plus long, ou deux bords transversaux identiques, dans laquelle les bords transversaux correspondent respectivement à une section circulaire de la périphérie de nacelle de la nacelle dans la position concernée, et dans laquelle les bords transversaux présentent respectivement une corde, dans laquelle la nacelle est divisée dans le sens longitudinal en sections, et par section le nombre de segments de coque est sélectionné et/ou les segments de coque sont dimensionnés de sorte que la corde du bord transversal plus long, et/ou pour un bord transversal identique la longueur de l'un bord transversal ou du bord longitudinal corresponde à la largeur disponible à l'intérieur d'un conteneur de mer standard (conteneur de 20 pieds (6 m) ou de 40 pieds (12 m)) de sorte que chacun de ces segments puisse être placé dans le conteneur.

**8.** Nacelle (1) d'une éolienne (100) selon l'une quelconque des revendications précédentes,
**caractérisée en ce que**
le carénage de nacelle (1270) est fixé au module porteur (640) et est porté par celui-ci.

**9.** Nacelle (1) d'une éolienne (100) selon l'une quelconque des revendications précédentes,
**caractérisée en ce que**
une liaison amortie élastiquement existe entre le module porteur (640) et le carénage de nacelle (1270).

**10.** Nacelle (1) d'une éolienne (100) selon l'une quelconque des revendications précédentes,
**caractérisée en ce que**
des segments de coque ou les segments de coque (308) du carénage de nacelle (1270) sont fabriqués sensiblement en aluminium, en particulier dans un procédé d'emboutissage profond, et respectivement au moins un profil de lèvre étanche (302) pour la réception d'une lèvre étanche (304) est présent pour la composition étanche avec d'autres segments de coque et/ou au niveau d'un ou du bâti porteur (1974) et présente respectivement une lèvre étanche (304).

**11.** Nacelle (1) d'une éolienne (100) selon l'une quelconque des revendications précédentes,
**caractérisée en ce que**
le carénage de nacelle (1270) présente une section de prolongement tubulaire pour entourer une section supérieure de la tour et/ou qu'une section de carénage (6) est prévue, laquelle entoure un moyeu de rotor et présente respectivement une section de prolongement tubulaire pour entourer une zone d'emplanture d'une pale de rotor.

**12.** Nacelle d'une éolienne selon l'une quelconque des revendications précédentes,
**caractérisée en ce que**
un ou le carénage présente un carénage principal et un raidisseur de carénage disposé au niveau de celui-ci afin de terminer vers l'avant le carénage, dans laquelle le raidisseur de carénage est divisé en plusieurs segments de taille identique, en particulier de sorte que ceux-ci puissent être logés de manière couchée dans un conteneur standard de 20 pieds (6 m) ou conteneur de 40 pieds (12 m).

**13.** Eolienne (100) avec une nacelle (1) selon l'une quelconque des revendications précédentes.

**14.** Procédé de fabrication d'une nacelle (1) d'une éolienne (100) comprenant les étapes suivantes :

- la fourniture d'un support de machine (10),
- la fabrication d'un module porteur (640) pour la réception de dispositifs de commande électriques et
- le placement du module porteur (640) sur le support de machine (10) dans des moyens de découplage (634).

**15.** Procédé selon la revendication 14,
**caractérisé en ce que**
le module porteur est équipé de dispositifs de commande électriques avant le placement sur le support de machine.

FIG. 1

FIG. 2

FIG. 4

308

300

310

FIG. 3

300

304

306

302

300

308

300

320

308

308

308

FIG. 5

EP 3 129 651 B1

FIG. 6

EP 3 129 651 B1

FIG. 7

FIG. 8

FIG. 9

FIG. 10

FIG. 11

EP 3 129 651 B1

FIG. 12

FIG. 13

1240

1264

1264

1210

FIG. 14

EP 3 129 651 B1

FIG. 15

EP 3 129 651 B1

**FIG. 16**

1268

FIG. 17

FIG. 18

FIG. 19

FIG. 20

FIG. 22

FIG. 21

$$\sin\left(\frac{\alpha}{2}\right) = \frac{b}{2} \cdot \frac{1}{R} \qquad (1)$$

$\alpha$ : Teilung

$$\alpha \cdot n = 360° \qquad (2)$$

FIG. 23

FIG. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013195653 A1
- DE 102010043435 A1
- US 20070090269 A1